# EUROPÄISCHE PATENTSCHRIFT

(11) **EP 1 723 342 B1**
(45) Veröffentlichungstag und Bekanntmachung des Hinweises auf die Patenterteilung: **14.09.2011**
(21) Anmeldenummer: 05715594.7
(22) Anmeldetag: 28.02.2005
(51) Int. Cl.: F16B 5/06, E05C 19/02, E05C 1/16

(54) **KLIPS- ODER SCHNAPPBEFESTIGUNG ZUR FESTLEGUNG EINER DÜNNEN WAND AN EINEN WANDTRÄGER**
CLIP-ON OR SNAP-ON FIXING FOR FASTENING A THIN WALL TO A WALL SUPPORT
FIXATION PAR CLIPSAGE OU ENCLIQUETAGE PERMETTANT DE FIXER UNE PAROI MINCE SUR UN SUPPORT DE PAROI

(30) Priorität: 27.02.2004 DE 202004003238 U; 29.03.2004 DE 202004005083 U; 15.10.2004 DE 202004016009 U
(43) Veröffentlichungstag der Anmeldung: 22.11.2006
(60) Teilanmeldung: 07009093.1
(73) Patentinhaber: Ramsauer, Dieter, 58332 Schwelm (DE)
(72) Erfinder: Ramsauer, Dieter, 58332 Schwelm (DE)
(74) Vertreter: Stratmann, Ernst
(86) Internationale Anmeldenummer: PCT/EP2005/002084
(87) Internationale Veröffentlichungsnummer: WO 2005/083275

(56) Entgegenhaltungen:
- FR-A- 2 746 944
- US-A- 1 426 239
- US-A- 1 454 890
- US-A- 1 659 992
- US-A- 3 583 736
- US-A- 3 797 870
- US-B1- 6 547 289

## Beschreibung

### Hintergrund der Erfindung

Die Erfindung betrifft eine Schnappbefestigung zur Festlegung einer mit Durchbruch versehenen dünnen Wand, wie Gehäusewand, Türblatt, Klappe oder dgl., an einem Wandträger, wie Gehäuserahmen, Türrahmen, Wandöffnungsrand oder dgl., mit einem am Wandträger im Durchbruch anbringbaren Fußteil mit sich von diesem wegerstreckenden Kopfteil, welcher Kopfteil in seinem Längsschnitt einen vom Kopfende in Richtung zum Fußteil einen zunächst anwachsenden und dann wieder abfallenden Durchmesser aufweist, welcher Kopfteil ein männliches Einsteckteil darstellt, das von einem hinterschnittenen, von dem Durchbruch der dünnen Wand gebildeten oder getragenen weiblichen Einsteckteil unter Überwindung einer in Richtung des Durchmessers radial nach außen wirkenden Federkraft aufnehmbar ist, wobei der Kopfteil bei einer Schnappbefestigung der eingangs genannten Art das Kopfteil eine Führung oder Kanal für ein oder zwei oder mehr durch zumindest eine Feder in eine über das Ende der Führung oder des Kanals hinausragende gedrückte Schubelemente darstellt, deren aus dem Führungskanal hinausragende Enden in einer senkrecht zur dünnen Wand liegenden Projektionsebene eine dreieckige oder ballenförmige Gestalt haben.

### Kurze Beschreibung des Standes der Technik

Eine derartige Schnappbefestigung ist aus der US-A-1 426 239 (WITZBERGER ETIENNE) bereits bekannt und einem von der Fa. Böllhoff GmbH, Archimedesstr. 1-4, 33649 Bielefeld, herausgegebenen Prospektblatt bereits bekannt. Ein mittels eines ein Gewinde aufweisenden Fußteils am Wandträger befestigbarer Stift besitzt dort einen kugel- bis ballonförmigen Kopf, der das männliche Einsteckteil darstellt, während als weibliches Einsteckteil eine mit Kragen versehene Kappe dient, die in eine Öffnung der dünnen Wand klipsartig einsteckbar ist und aufgrund des aus einem nachgiebigen Kunststoff bestehenden Baumaterials ermöglicht, den Kopf federnd aufzunehmen.

Nachteilig ist hier die Tatsache, dass das Kunststoffmaterial seine Integrität und Federkraft im Laufe der Zeit und bei häufiger Belastung verlieren kann und dass eine hohe Festigkeit der Halterung nicht gewährleistet ist. Außerdem ist der Aufbau sehr kompliziert und teuer.

Desweiteren sei auf die US-A-3 583 736 (CELINA WILLIMZIK) und die FR-A-2 746 944 verwiesen.

### Aufgabe der Erfindung

Aufgabe der Erfindung ist es, eine Schnappbefestigung der o.g. Art dahingehend zu schaffen, dass diese Nachteile vermieden werden und eine zeitlich unbegrenzt anhaltende hohe Federkraft gewährleistet ist, und dass die Konstruktion durch ihre Einfachheit eine billige Herstellung ermöglicht und eine einfache Montage eine billigere Herstellung von z. B. Blechschränken und aller Art Verkleidungen und Abdeckungen und Endverschlüsse ermöglicht.

### Lösungswege

Gelöst wird die Aufgabe dadurch, dass der Fußteil im wesentlichen den gleichen, insbesondere gespiegelten Aufbau des Kopfteils hat.

Durch diese Maßnahmen wird erreicht, dass eine Stahlfeder mit ihren zeitlich unveränderlichen Federeigenschaften verwendet werden kann, im Gegensatz zum Stand der Technik, wo mit der Zeit sich veränderndes Kunststoffmaterial die Federkraft liefern muss.

Ein weiterer Vorteil ist, daß die Federkraft beliebig hoch gemacht werden kann, einfach durch Anwendung von entsprechend hohe Federkonstante aufweisenden Federeinrichtungen, während bei Kunststoff die Federkraft durch die Materialeigenschaften des Kunststoffes begrenzt sind.

Das weibliche Einsteckteil ist beim Stand der Technik in einem runden Durchbruch in der dünnen Wand anzuordnen, bei der erfindungsgemäßen Ausführungsform wird das weibliche Einsteckteil vorzugsweise aus einem rechteckigen Durchbruch in der dünnen Wand, vorzugsweise in einem Abkantungsbereich am Rande der dünnen Wand gebildet, wodurch ermöglicht wird, einen kleineren, weil schmaleren Durchbruch vorzusehen, ohne dass dabei die Festigkeit leiden muss.

Eine besonders günstige Ausführungsform ergibt sich erfindungsgemäß dann, wenn die Schubelemente zwei verschieblich nebeneinander (oder hintereinander) liegende Platten mit jeweils einem in Bewegungsrichtung langgestreckten Durchbruch darstellen, die jeweils allein oder gemeinsam einen Aufnahmeraum für eine Spiraldruckfeder bilden, wobei im zweiten Ende die Durchbrüche derart weg von den balligen oder dreieckigen freien Enden verschoben angeordnet sind, dass die gemeinsame Feder die beiden Platten in deren Bewegungsrichtung auseinander drängt. (Anspruch 21 und 22)

Gemäß einer weiteren Ausbildung der Erfindung weisen die Kanten der Durchbrüche Vorsprünge oder Rücksprünge zur Fixierung der Spiraldruckfeder und der Platten auf (Anspruch 23). Dadurch kann die Spiralfeder in den Platten oder der Platte vormontiert werden, so daß die spätere Montage in einem männlichen Einsteckteil erleichtert wird.

Gemäß einer noch anderen Ausbildung der Erfindung sind die Druckfeder und die Durchbruchkanten derart geformt, daß die Druckfeder die beiden Platten aneinander hält und zu einer vormontierbaren Handhabeeinheit werden läßt.

Auch das trägt zur Vereinfachung der Handhabung vor und während der Montage bei.

Gemäß einer noch anderen Weiterbildung der Erfindung weisen die Platten an ihrer äußeren Längskante einen Einschnitt zur Begrenzung ihrer Längsbewegung durch einen in den Einschnitt hineinragenden Vorsprung oder Stift auf (Anspruch 24). Besonders günstig ist es, wenn erfindungsgemäß die beiden Platten in einem U-förmigen Gehäuse längsverschieblich geführt sind, dessen Schenkelenden an einer vom Fußteil gebildeten Grundplatte befestigt sind oder einstückig ausgehen. (Anspruch 25).

Das U-förmige Gehäuse kann im Stegbereich einen Durchbruch zur Aufnahme eines Stiftes aufweisen (Anspruch 26), der in bereits geschilderter Weise zur Begrenzung der Längsbewegung der Platte oder der Platten dient.

Bei einer erfindungsgemäßen Ausführungsform ist es günstig, wenn die beiden Teile eine gemeinsame zwischen ihnen liegende Grundplatte aufweisen. (Anspruch 2).

Die Fußplatte des Kopfteils kann aber auch von dem Steg des Fußteils gebildet oder getragen sein. (Anspruch 3).

In diesem Fall ist es günstig, wenn das Fußteil eine größere Längserstreckung als das Kopfteil aufweist und mit seinem Steg Auflageschultern für die dünne Wand bildet (Anspruch 4) Dies gibt einen Anschlag senkrecht zur Ebene der dünnen Wand, der dann nicht von anderen Bauelementen des Wandträgers oder des Gehäuses gebildet werden muss.

Die freien Enden der verschieblichen Platten des Fußteils können eine derartige unsymmetrische Dachform haben, dass das Fußteil in einen geeigneten Durchbruch in einer dünnen Wand oder Wandträger unter Einschieben der längsverschieblichen Platten unter Führung des flacher geneigten Daches eingeschoben werden kann, eine Rückwärtsbewegung unter Führung des steileren Teils des Daches aber wegen Selbsthemmung der Platten in ihrer Führung nicht möglich ist. (Anspruch 5).

Eine derartige Anordnung lässt sich nicht ohne besonderes Werkzeug wieder lösen, was in vielen Fällen von Vorteil ist.

Werden selbsthemmende Schnappbefestigungen verwendet, ist es günstig, wenn das in dem der selbsthemmenden Schnappbefestigung umfassenden Gehäuse stirnseitig und/oder rückseitig ein Werkzeug wie Schlüssel einführbar ist, der durch Drehung die Schubelemente gegen die Federkraft zurückzuziehen in der Lage ist. (Anspruch 6)

Dadurch wird im Bedarfsfall die Demontage eine derartige Befestigung ermöglicht.

Gemäß einer noch anderen Ausführungsform der Erfindung kann das Gehäuse mit Befestigungsnocken versehen sein, die in einer Durchbruchöffnung in einer dünnen Wand einklipsbar sind.

Aus dem Gehäuse kann eine Betätigungswelle vom Betätigungsrad oder ein Schlüssel hervortreten, mit dem die Schubelemente des Gehäuses zurück ziehbar sind. (auch Anspruch 8)

Gestaltet man das Betätigungsrad so, dass es in der Öffnungsstellung sich arretieren lässt, erleichtert das die Betätigung einer Schnappbefestigung, bei denen mehrere Betätigungsräder vorhanden sind. (Anspruch 9)

Von dem Gehäuse kann auch eine Griffeinrichtung vorspringen, was zum Beispiel günstiger ist, wenn es sich bei dem Gehäuse um eine Schublade oder eine Einschubeinrichtung handelt. (Anspruch 10)

Das Gehäuse kann sowohl eine nicht selbsthemmende Schnappbefestigung wie auch eine selbsthemmende Schnappbefestigung umschließen, wobei die beiden Arten der Schnappbefestigung zueinander bezüglich der Entfernung zur Ebene der dünnen Wand auf gleicher Höhe sind oder versetzt sind. (Anspruch 11) (Anspruch 15)

Das Fußteil kann als Befestigungslöcher Langlöcher aufweisen, was dann günstig ist, wenn die Anordnung als Bock dienen soll, der verschiebbar angeschraubt werden soll.

Die Erfindung betrifft auch eine Schublade oder Einschub mit einem dünnwandigen Frontbereich mit einer erfindungsgemäßen schnappbefestigung, wobei die Frontplatte die dünne Wand und die Schubladenaufnahme den Wandträger gemäß einem der Ansprüche 1 bis 16 darstellt.

Die Erfindung richtet sich auch auf einen Schrank mit einer dünnen Wand oder Türblatt, bei dem die Schnappbefestigung gemäß einer der vorhergehenden Ausgestaltungen ausgebildet ist. (Anspruch 17, 18).

Die dünne Wand kann eine oder mehrere Handgriffe oder Griffmulden aufweisen, um so die Handhabung der dünnen Wand zu erleichtern (Anspruch 19). In einem solchen Falle ist es günstig, wenn die Mulden in Durchbrüchen angeordnet sind, in die eine Schnappbefestigung ähnlich der des Fußteils der obigen Ausführungsformen eingreift.

Soll die Anbringung der Befestigung unsichtbar sein, kann eine Doppelabkantung dies ermöglichen, alternativ ist aber auch möglich, die dünne Wand mit Stegen zu versehen, die Durchbrüche zur Aufnahme der symmetrisch dachförmigen Enden der Schnappbefestigung gemäß einer der vorhergehenden Ausführungsformen aufweist. (Anspruch 20).

### Kurze Beschreibung der Zeichnungen

Die Erfindung wird nachfolgend anhand von Ausführungsbeispielen näher erläutert, die in den Zeichnungen dargestellt sind.

Es zeigt:
- Fig. 1: einen an ein Schaltschrankrahmen angelenkte Schaltschranktür, die durch eine erfindungsgemäß ausgebildete Schnappbefestigung in geschlossener Stellung gehalten wird;
- Fig. 2: eine ausgeschnittene Draufsicht auf den im Türblatt und im Türrahmen vorgesehenen Durchbruch für die erfindungsgemäß ausgestaltete Schnappbefestigung;
- Fig. 3: die in Fig. 1 eingesetzte als Türverschluss dienende Schnappbefestigung in einer Seitenansicht, die mittels Fußteil in Form einer ähnlich aufgebauten Schnappbefestigung am Türrahmen festlegbar ist;
- Fig. 3A: in einer perspektivische Ansicht und
- Fig. 3B: in einer Seitenansicht eine nicht erfindungsgemäße Schnappbefestigung mit einem Fußteil, der von einer mit Befestigungsbohrungen versehenen Befestigungsplatte gebildet ist;
- Fig. 4: eine nicht erfindungsgemäße Ausführungsform, bei der der Fußteil von einem Schraubbolzen gebildet ist;
- Fig. 5A: eine perspektivische Ansicht eines doppelt U-förmigen Gehäuses für jeweils zwei zueinander verschieblich angeordneten verschieblichen Platten,
- Fig. 5B: eine Stirnansicht,
- Fig. 5C: eine Axialschnittansicht entlang der Schnittfläche B-B der Fig. 5B und
- Fig. 5D: eine Ansicht von oben auf das Gehäuse gemäß Fig. 5A;
- Fig. 6: eine mit Durchbruch und Seitenkantenausschnitt versehene Platte zur Verwirklichung der Schnappbefestigung am Türrahmen;
- Fig. 7A: eine perspektivische Ansicht,
- Fig. 7B: eine Seitenansicht und
- Fig.7C: eine Ansicht von oben auf eine mit Durchbruch und Seitenkanteneinschnitt versehene Montageplatte mit symmetrischer dreieckiger Spitze, die gemäß
- Fig. 8: eine Spitze mit einer konkaven Dreieckseite und gemäß
- Fig. 9: eine ballige Spitze (mit konvexer Dreieckseite) aufweist;
- Fig. 10A: zeigt eine Schnittansicht ähnlich der der Fig. 1 durch eine mit erfindungsgemäß ausgebildeter Schnappbefestigung versehene Schrankwand;
- Fig. 10B: eine Schnittdarstellung gemäß der Schnittlinie A-A der Fig. 10A;
- Fig. 10C: eine Ansicht von oben auf die Ausführungsform gemäß Fig. 10A,
- Fig. 10D: eine perspektivische Darstellung der Anordnung gemäß Fig. 10A;
- Fig. 11A: den Seitenrahmen mit Seitenwand eines Schrankes, bei dem erfindungsgemäße Schnappbefestigungen sowie muldenartige Handgriffanordnungen vorgesehen sind,
- Fig. 11 B: eine (vergrößerte) Schnittansicht entlang der Linie E-E der Fig. 11A;
- Fig. 11 C: eine (vergrößerte) Schnittansicht entlang der Schnittlinie D-D der Fig. 11A;
- Fig. 11D: eine perspektivische Ansicht auf den Rahmen gemäß Fig. 11A mit einer erfindungsgemäß ausgestalteten Schnappbefestigung gemäß Fig. 11B und 11C;
- Fig. 12: einen Querschnitt durch den Rahmen eines mit Türblatt versehenen Schrankes und dessen Schnappbefestigung;
- Fig. 13A und 13B: eine Ansicht von oben und eine Schnittansicht entlang der Linie F-F der Fig. 13A des Schrankes gemäß Fig. 12 zur Erläuterung einer auf die Hinterfläche des Türblatts aufgeschweißten Halterung mit Durchbrüchen zur Aufnahme der Enden der Schubplatten der Schnappbefestigung;
- Fig. 14A bis 14D: Ausführungsformen der Schubplatten mit Ausgestaltungen zur Bildung einer handhabbaren Einheit aus Platten und Feder;
- Fig. 15A: eine Schnittansicht und
- Fig. 15B: eine Seitenansicht eines nicht erfindungsgemäßen Schnappelements, bei dem der Fußteil von einer Platte 218 gebildet wird;
- Fig. 16A: eine Schnittansicht und
- Fig. 16B: eine Seitenansicht und
- Fig. 16C: das Gehäuse gemäß Fig. 16A oder bei mit einem Werkzeug zum Eindrücken eines nach innen weisenden Vorsprungs zum Festhalten der Platten;
- Fig. 17A: eine Schnittansicht durch eine Art von Schnappbefestigung ähnlich der in Fig. 3, jedoch in Blechtechnik hergestellt;
- Fig. 17B: eine Anordnung ähnlich der Fig. 1, jedoch wiederum in Blechtechnik hergestellt;
- Fig. 17C: das zugehörige Gehäuse des klipsbaren Verbindungsteils;
- Fig. 17D: eine Schnittansicht durch die in dem Gehäuse gemäß Fig. 17A einbringbaren Platten;
- Fig. 18: eine Gehäuseform ähnlich der Fig. 17C, jedoch mit einer vorspringenden Führung für Platten;
- Fig. 19A: eine Seitenansicht und
- Fig. 19B: eine Ansicht von der Seite auf ein Gehäuse, das in Spritzgußtechnik hergestellt ist;
- Fig. 19C: eine Seitenansicht zugehöriger Platten und
- Fig. 19D: eine Draufsicht;
- Fig. 20: ein Gehäuse ähnlich der Fig. 18, jedoch in Spritzgußtechnik hergestellt;
- Fig. 21 und 22 sowie 23: in verschiedenen Ansichten ein nicht erfindungsgemäße Schnappelement, das mittels Stopfen arretierbar ist und mittels Schlüssel lösbar ist;
- Fig. 24 bis 28: verschiedene Ansichten der zugehörigen Schiebeplatten;
- Fig. 29A, 29B: eine noch ander nicht erfindungsgemäße Ausführungsform;
- Fig. 30: das zugehörige Gehäuse;
- Fig. 31 und 32: die zugehörige Platte;
- Fig. 33A und 33B: eine noch andere nicht erfindungsgemäße Ausführungsform;
- Fig. 34A bis 34D: eine nicht erfindungsgemäße Ausführungsform ähnlich der Fig. 20, die mit Schlüssel lösbar ist;
- Fig. 35: den zugehörigen Durchbruch in der dünnen Wand;
- Fig. 36: eine Anwendung, bei der die Öffnung von außen möglich ist;
- Fig. 37: eine entsprechende Anwendung mit Öffnungsmöglichkeit von hinten;
- Fig. 38A und 38B: die Durchbrüche für die dünne Wand bzw. Wandträger bei Verwendung eines Gehäuses gemäß Fig. 41A und Fig. 41 B;
- Fig. 39A und 39B: die entsprechenden Durchbrüche für eine Ausführungsform gemäß Fig. 40A bis 40C;
- Fig. 40A bis 40D: ein Gehäuse, das mittels von der Gehäusewand gebildeten Klipsvorsprüngen in dem Wandträger arretierbar ist;
- Fig. 41A und 41B: eine entsprechende nicht erfindungsgemäße andere Form;
- Fig. 42: einen Axialschnitt durch das Gehäuse gemäß Fig. 40A bis 40D;
- Fig. 43A bis 43D: eine noch andere nicht erfindungsgemäße Ausführungsform, bei der ein Griff verwendet wird;
- Fig. 44: eine Schnittansicht einer Anwendung mit einer nicht erfindungsgemäßen Ausführungsform die durch ein Rad lösbar ist;
- Fig. 45A, 45B und 45C: eine als Bock verwendbare nicht erfindungsgemäß ausgestaltete Schnappbefestigung;
- Fig. 46A und 46B: in einer Längsschnittansicht und einer Querschnittsansicht eine als Verbinder zweier dünner Wände ausgestaltete Ausführungsform
- Fig. 47A und 47B: eine Seitenansicht und eine Draufsicht auf den Verbinder gemäß Fig. 46 A;
- Fig. 48: eine Ansicht ähnlich der Fig. 46 B, jedoch mit noch nicht verbundenen Wänden;
- Fig. 49: eine Seitenansicht einer nicht erfindungsgemäßen Schnappbefestigung mit Halteelementen, die um eine parallel zur Ebene der dünnen Wand liegende Achse schwenkbar sind, während bei de nicht erfindungsgemäßen Ausführungsform gemäß den
- Fig. 50A, 50B und 50 C: diese Achse senkrecht zur dünnen Wand liegt.

### Detaillierte Beschreibung der Erfindung

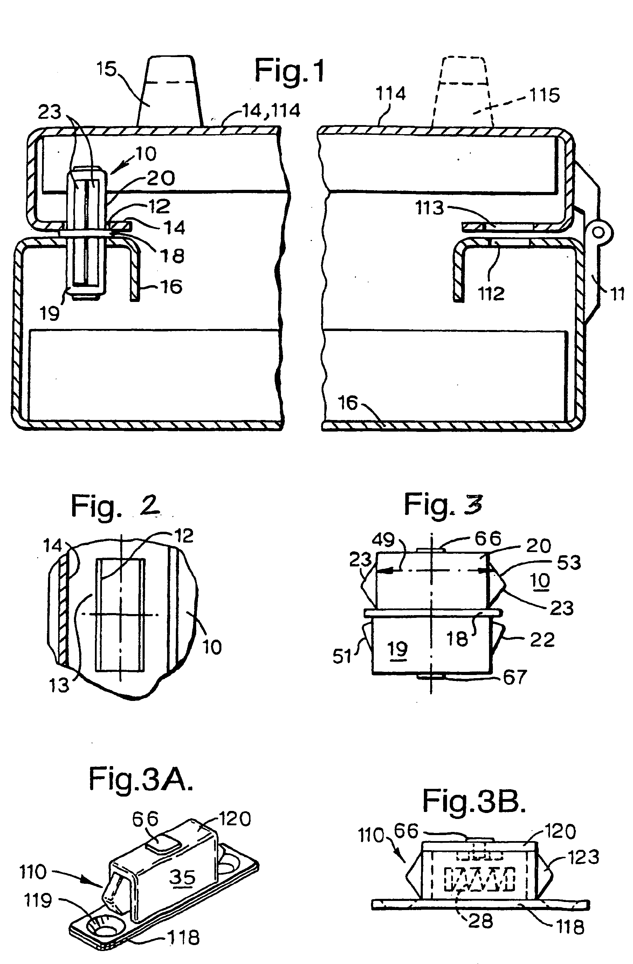

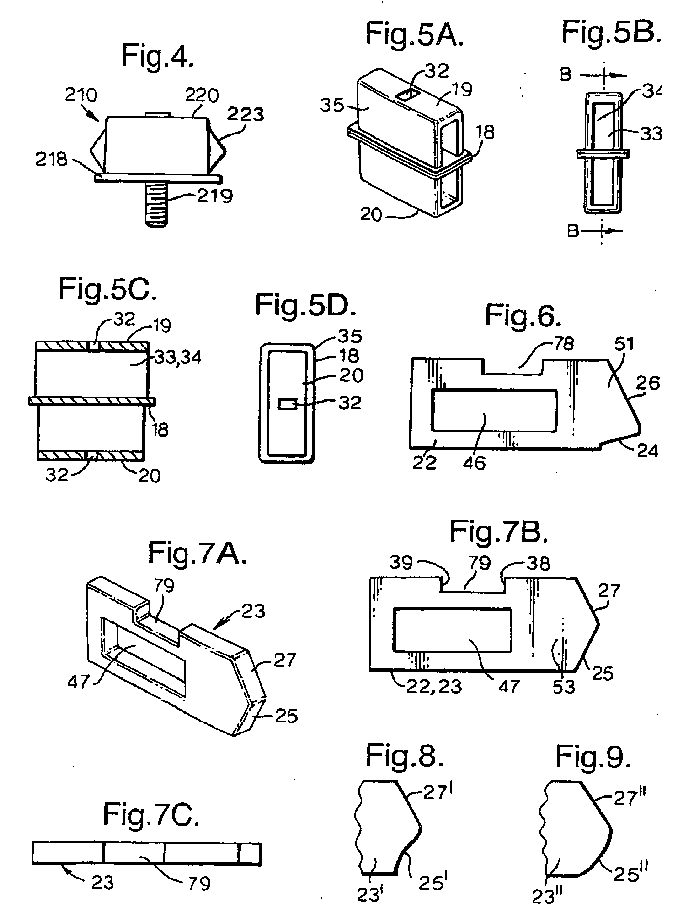

Fig. 1 zeigt in einer Querschnittsansicht eine Schnappbefestigung 10 zur Festlegung einer mit einem Durchbruch 13 versehenen dünnen Wand 14, wie Gehäusewand, hier Türblatt 14, Klappe oder dgl., an einem ebenfalls mit einem Durchbruch 12 versehenen Wandträger 16, wie ein Gehäuserahmen, bzw. Türrahmen, Wandöffnungsrand oder dgl., mit einem am Wandträger 16 im Durchbruch 12 anbringbaren Fußteil 18 mit von diesem sich wegerstreckendem Kopfteil 20, welcher in seinem Längsschnitt, der als Seitenansicht in Fig. 3 zu erkennen ist, vom Ende des Kopfteils 20 in Richtung zum Fußteil 18 einen zunächst anwachsenden und dann wieder abfallenden Durchmesser aufweist, welcher Kopfteil 20 ein männliches Einsteckteil darstellt, das von einem hinterschnittenen, von dem Durchbruch 13 in der dünnen Wand 14 gebildeten oder getragenen Einsteckteil unter Überwindung einer radial in Längsschnittrichtung wirkenden Federkraft, siehe die Feder 28 in Fig. 3B aufnehmbar ist. Das Kopfteil 20 der Schnappbefestigung 10 besitzt Führungen oder Kanäle 33, 34 für ein oder zwei Schubelemente 23, die durch zumindest eine Feder 28 in eine über das Ende des Führungskanals hinausragende Stellung gedrückt wird oder werden, siehe die Fig. 3B. Das aus dem Führungskanal 33 bzw. 34 herausragende Ende hat eine dreieckige, siehe Fig. 3 oben, aber auch Fig. 7B Gestalt, besteht also aus Schrägflächen oder Dreieckseiten 25, 27, wie in Fig. 7B erkennbar.

Zwei derart identisch aufgebaute Schubelemente 23 sind gegenläufig nebeneinander innerhalb des Kanals 33, 34 angeordnet und sind gegeneinander und bezüglich der vier Wände des Kanals verschieblich. Diese Hin- und Herbewegung der Schubelemente 23 wird begrenzt durch einen Ansatz 42, der Teil eines Stopfens 66 sein kann, der durch eine passende Öffnung, siehe Fig. 5D, Bezugszahl 32 in der Schmalwand des Kopfteils 20 angeordnet ist. Dieser Ansatz reicht in eine Einsenkung 79 des Schubelementes 23 hinein und schlägt an dessen Endflächen 38, 39 an. Während sich somit der Stopfen 66 in Stellung befindet, wie in Fig. 3B erkennbar können die beiden gegeneinander läufigen Schubelemente 23, 123 nicht aus der Gehäuseführung herausfallen, andererseits werden sie durch die Feder 28 in eine Stellung gedrückt, die in Fig. 3B erkennbar ist, und bei der diese mit ihrer Dreieckspitze über die Führungskanäle hinausragen. Die Schrägflächen 25, 27 bilden somit die zunächst anwachsende und dann wieder abfallende Durchmessererstreckung des Kopfteils, von der anfangs die Rede war. Dieses Schnappelement 10 kann somit in den Durchbruch 12, der vom Türblatt 14 gebildet wird, eingeschoben werden, wobei die Schrägfläche 27 an der Schmalkante dieses Durchbruches entlang gleitet und dabei das Schubelement 23 gegen die Kraft der Feder 28 in den Führungskanal zurückdrückt, bis die Spitze des Dreiecks erreicht ist, woraufhin sich das Schubelement 23 wieder nach außen bewegt und die Kante des Durchbruches entlang der Schrägfläche 25 nach unten gleitet und bewirkt, dass sich das Schnappelement wieder aus der Öffnung hinaus bewegt. Bei gleicher Schrägung wie bei der Schrägfläche 27 erlaubt die Schrägfläche 25 eine Auswärtsbewegung, die allerdings auch abgewandelt werden kann, indem diese Schrägfläche 25 konkav, wie bei 25' oder konvex wie bei 27" gestaltet wird, wodurch die Kraftaufwendung, die notwendig ist , um das Schnappelement wieder zu lösen, verändert wird.

Wie Fig. 1 erkennen lässt, befindet sich der Durchbruch 12 für die Schnappbefestigung an einer Abkantung des Türblattes 14, so dass die Befestigung dann, wenn die Tür geschlossen ist, nicht sichtbar ist. Die Öffnung des Gehäuses 16 kann statt durch eine Tür, die ein Scharnier 11 und einen Türgriff 15 aufweist, auch durch ein Wandteil verschlossen werden, bei dem das Scharnier 11 weggelassen wird und statt dessen über Öffnungen 112, 113 eine ähnliche Schnappeinrichtung angebracht werden könnte, wie sie links bei 10 dargestellt ist. Diese Wand 114 kann einen zweiten Handgriff 115 haben, um die Handhabung zu erleichtern, kann aber auch ohne Handgriff sein.

Allgemein kann es sich bei der Abkantung links in Fig. 1 des Rahmens 16 um eine Wandöffnung handeln, die durch ein entsprechendes Verschlussteil verschlossen werden soll.

Die Befestigung des Schnappelements 10 am Türrahmen 16 od. dgl. kann auf herkömmliche Weise mittels eines Schraubbolzens erfolgen, siehe die an der Fußplatte 218 angebrachte Bolzenanordnung 219, Fig. 4, oder gemäß Fig. 3A, 3B mittels hier nicht dargestellter Schrauben, die durch Bohrungen 119 in der Fußplatte 118 angeordnet sind. Günstiger und an den oberen Teil der Schnappbefestigung angepasst ist eine Konstruktion, die aus Fig. 1 ebenfalls hervorgeht und erkennen lässt, dass das Fußteil im wesentlichen den gespiegelten Aufbau des Kopfteils 21 hat.

Der wesentliche Unterschied besteht darin, dass, siehe Fig. 6, die Schrägflächen 26, 24 unterschiedliche Steigung aufweisen. Mit der Schrägfläche 26 wird das Einschieben des Fußteils in eine entsprechende Öffnung 12, 112 in einem Rahmen od. dgl. dadurch erleichtert, dass eine relativ schwache Neigung vorgesehen ist, die keine Selbsthemmeffekte zulässt. Demgegenüber ist aber die Schrägung 24, die überwunden werden muss, um das Bauteil wieder aus der Öffnung herauszuziehen, so steil, dass Selbsthemmeffekte auftreten und ohne besonderes Werkzeug diese Entfernung des Bauteils aus der Öffnung nicht zulässt.

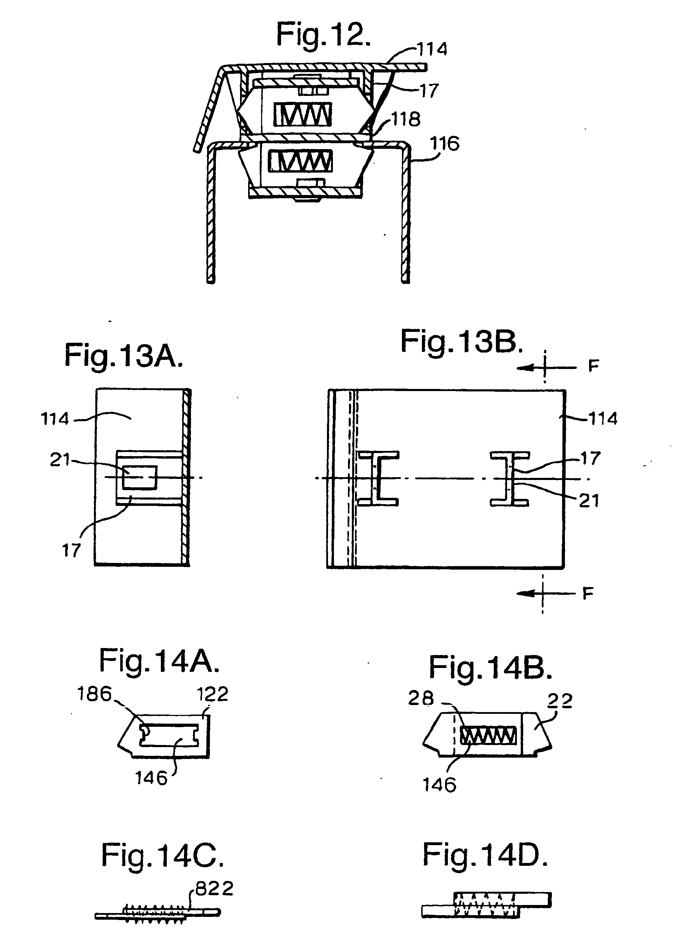

Eine besonders günstige Art die Federkraft aufzubringen, ist in den Fig. 14A bis 14D erläutert. Die beiden Schubelemente bestehen dabei aus zwei nebeneinander verschieblich liegenden Platten 122, siehe Fig. 14B, mit jeweils einem in Bewegungsrichtung langgestreckten Durchbruch 146. Diese beiden Durchbrüche, die nebeneinander liegen, bilden gemeinsam einen Aufnahmeraum für eine Spiraldruckfeder 128, wobei die Durchbrüche 146 derart weg von den balligen oder dreieckigen freien Enden verschoben angeordnet sind, dass die Feder die beiden Platten in deren Bewegungsrichtung auseinander drängt, also gemäß Fig. 14B nach rechts und nach links.

Die anderen Kanten des Durchbruches 146 können Vorsprünge 186 aufweisen, um die Feder innerhalb dieses Aufnahmeraums zu fixieren oder gleichzeitig die beiden nebeneinanderliegenden verschieblichen Platten 122 als Handhabbare Einheit zusammenzuhalten, wie in Fig. 14C und 14D (unterschiedliche Plattenstärken) erläutert wird.

Falls diese Montageeinheit nicht erforderlich ist oder die Anordnung sich ohnehin hält, kann der Vorsprung 186 aber auch weggelassen werden. Ohnehin werden nach Montage in den Kanälen die Federn und die Platten automatisch zueinander gehalten, und zwar durch die Wände des Kanals.

Der Aufbau der Schnappbefestigung gemäß Fig. 3 ist daher insofern von besonderem Vorteil, als sowohl die Schnappbefestigung durch Klipsvorgang in dem Rahmen 16 befestigt werden kann, wie auch dann anschließend eine dünne Wand, wie Tür 14 über die Schnappbefestigung geschoben und so arretiert werden kann, jedoch mit der Möglichkeit, durch entsprechend hohe Zugkraft die Tür wieder zu öffnen. Das ist bei der Schnappbefestigung des Fußes 19 nicht möglich. Um den zu demontieren, muss ein Werkzeug oder große Fingerkraft aufgewendet werden, um die beiden Schubelemente 22 gegen die Kraft der zugehörigen Feder in das Gehäuse soweit hineinzudrücken, dass die Durchbruchkanten des zugehörigen Durchbruches 12 über die steile Schrägfläche 24 hinweg gelangen.

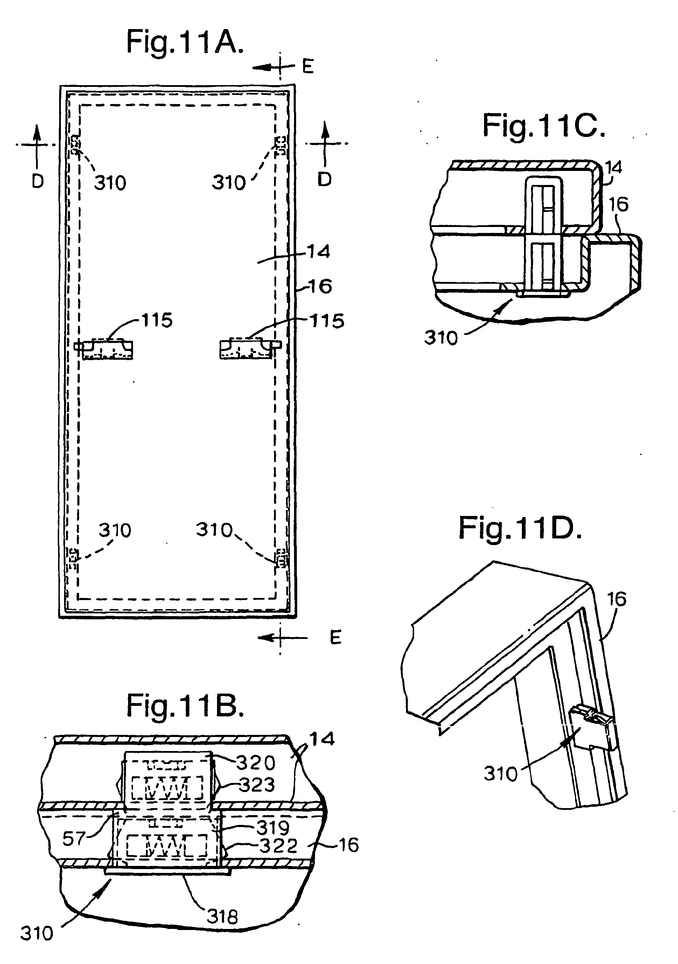

Bei der Ausführungsform gemäß Fig. 1 liegt die Abkantung der dünnen Wand 14 direkt neben der Abkantung des Rahmens 16, wobei nur die Dicke der Platte sie voneinander trennt. Bei der Ausführungsform gemäß Fig. 11B ist die Anordnung so gewählt, dass dieser Abstand größer ist, was manchmal von Vorteil sein kann. Zu diesem Zweck wird das Fußteil umgedreht.

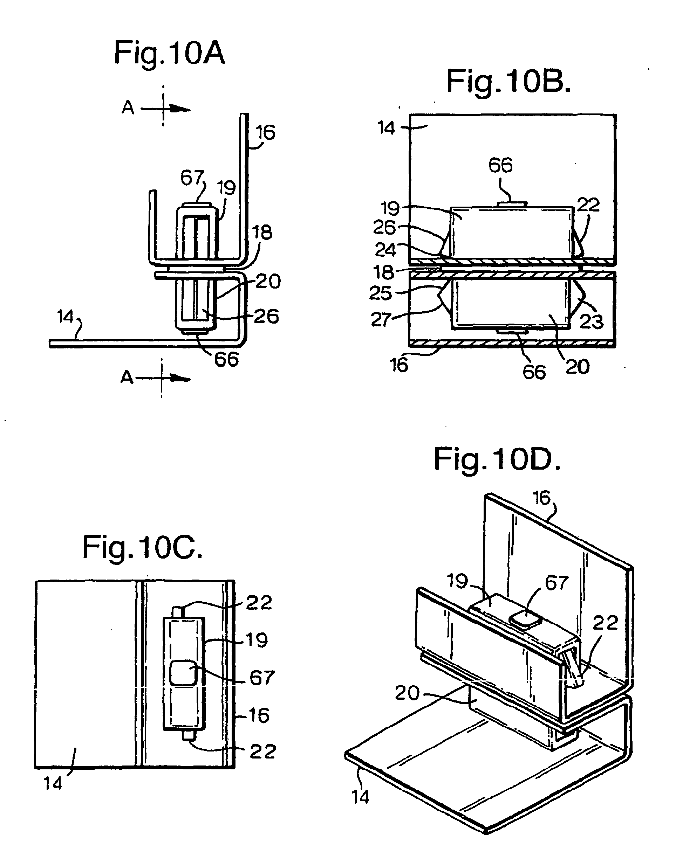

Die Figuren 10A, 10B, 10C und 10D zeigen nochmal in verschiedene Ansichten die

Ausführungsform, bei der die dünne Wand 14 unter Verwendung der erfindungsgemäßen doppelten Schnappbefestigung 19, 20 am Türrahmen 16 lösbar fixiert wird.

Hat das Türblatt keine Abkantung, an der eine zum Einschnappen geeignete Aufnahmeöffnung angebracht werden kann, kann gemäß den Fig. 12, 13A und 13B bei einem Schaltschrank mit einem Türrahmen 116 und einem Türblatt 114 dieses Türblatt 114 mit Stegen 17 mit von der freien Fläche des Türblatts ausgehenden Stegen 17 ausgestattet werden, die sich gegenüberliegen und Durchbrüche 21 aufweisen, in die Schubelemente 123 einfahren können.

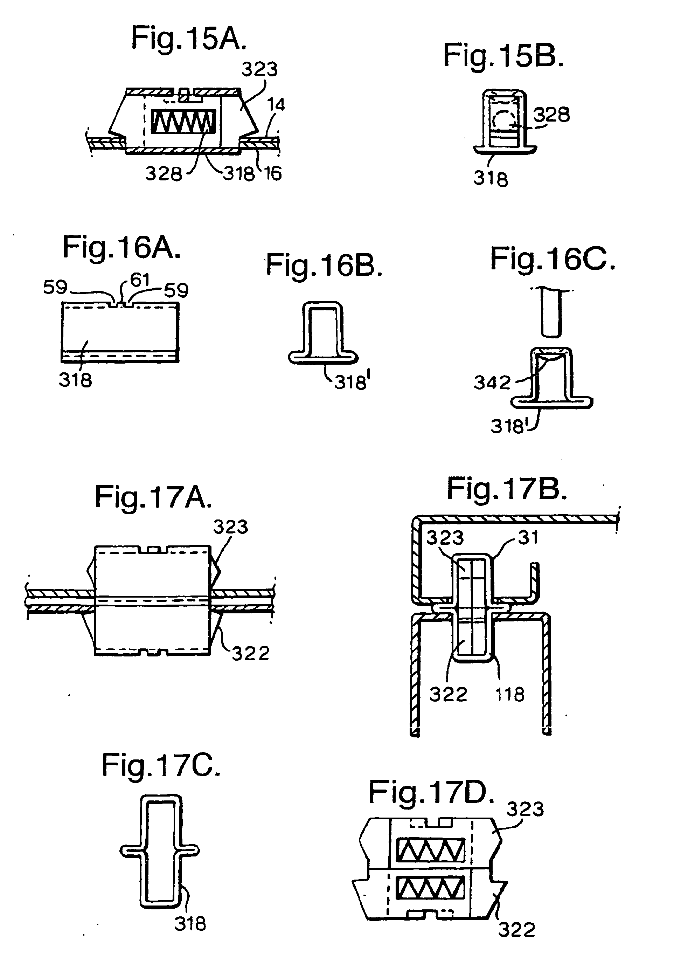

Bei Fig. 15A, 15B werden zwei dünne Wände mit einem Fußteil gemäß der Erfindung miteinander verbunden, wobei die zwei dünnen Wände 14 und 16 mittels selbsthemmenden Schubelementen 323 und damit derart gehalten werden, dass sie nur mit Werkzeug voneinander gelöst werden können. Das zugehörige Gehäuse kann aus gespritzter Metallegierung oder Kunststoff hergestellt werden und hat dann die Form gemäß Fig. 15B, während bei Fig. 16B die gleiche Form durch Rollbearbeitung von Blech entstanden ist. Man kann gemäß Fig. 16A durch zwei Einschnitte 59 einen Steg 61 frei machen, der anschließend mit einem Preßwerkzeug in das Profil hineingedrückt wird, wie Fig. 16C erkennen lässt. Der eingepresste Teil dient dann als Vorsprung zur Begrenzung der Bewegung der Schubelemente 323.

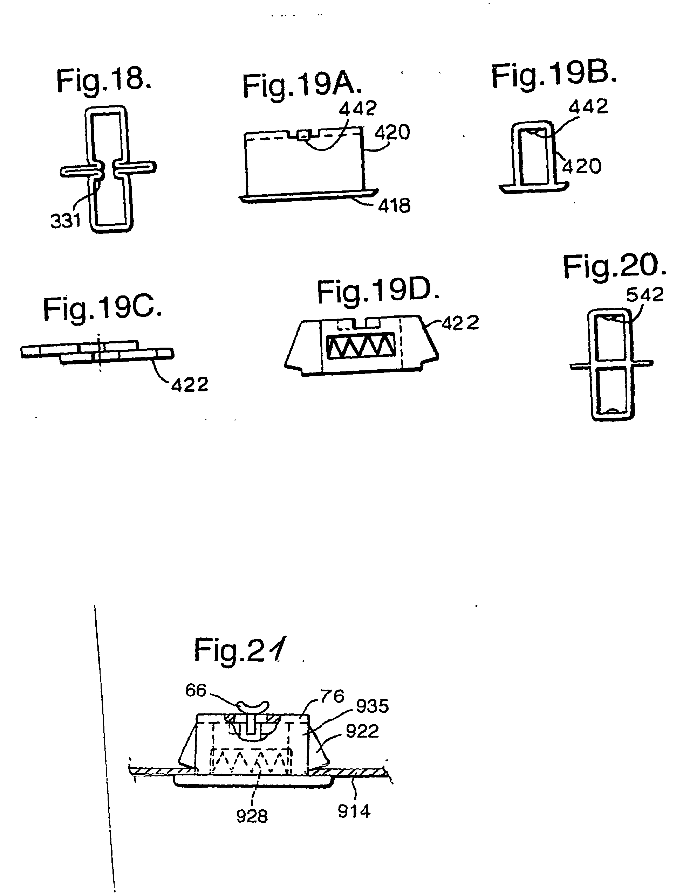

Diese aus Blech gerollte Ausführungsform kann noch erweitert werden zu einer Form, wie in Fig. 17A, 17B, 17C dargestellt ist, bei der ein Doppelpaar von Schubelementen ohne dazwischenliegende Bodenplatte in einer für diese Schubelemente ausreichend Platz bietenden Profilform verschiebbar gehalten sind. Man kann hier auch die beiden Paare von Schubelementen voneinander trennen, gemäß Fig. 18 ist dies durch eine nach innen gestülpte Faltung des Blechmaterials möglich, siehe Bezugszahl 331. Die in Fig. 16C dargestellte Ausführungsform lässt sich auch aus Metall oder Kunststoff spritzen, ein Beispiel ist in den Fig. 19A und 19B gegeben und Fig. 20 zeigt die entsprechende Technik in Verbindung mit einem doppelkanaligen Profil. Da die Ansätze 342 gemäß Fig. 16C, 442 gemäß Fig. 19A und 19B und 545 gemäß Fig. 20, letzteres eine Spritzguss- bzw. Kunststoffversion, nachgiebig sind, kann das jeweilige Schubelementpaar 323, 423 bzw. 422 bei vorstehenden aber im Moment des Einschiebens nachgiebigem Ansatz eingeschoben werden, der dann in den Rücksprungbereich gelangt und zurück federt. Auf diese Weise lässt sich ein getrenntes Stopfenteil vermeiden, wie es bei den vorherigen Ausführungsformen erläutert worden ist.

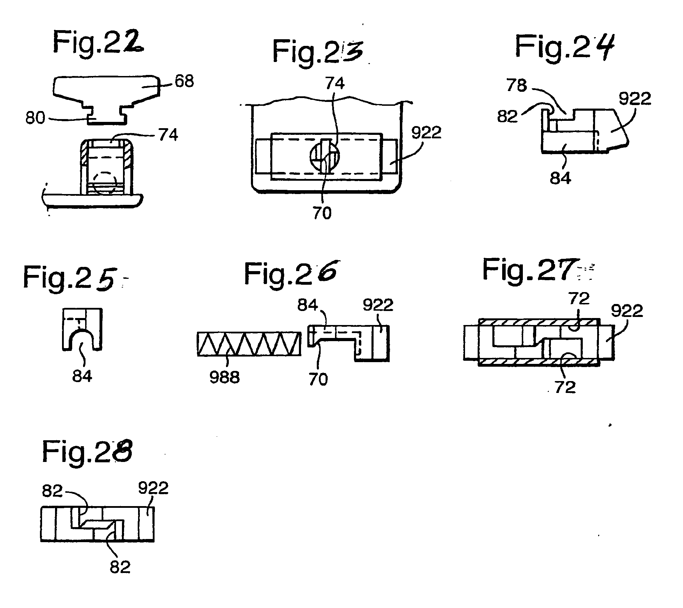

In den Fig. 21, 22, 23 ist eine nicht erfindungsgemäße Ausführungsform dargestellt, die es einerseits _{D} ermöglicht, mittels eines Stopfens 66 die Halteelemente 922 in ihrer ausgefahrenen, in Fig. 21 dargestellten Stellung zu blockieren, andererseits aber auch die Möglichkeit eröffnet, nach Entfernung des Stopfens 66 mittels eines Schlüssels 68 die Halteelemente 922 gegen die Kraft der Feder 988 zurückzuziehen und dadurch eine Lösung des Verbindungselementes von der dünnen Wand 914 zu ermöglichen, wann immer dies gewünscht ist. Ein weiterer Vorteil dieser Ausführungsform liegt in der Schrägfläche 70, siehe auch die Einzelteildarstellung der Halteelemente 922 in den Fig. 24, 25 und 26, 27, 28, welche Schrägfläche dazu führt, dass diese Halteelemente durch den Federdruck der Feder 928 nach außen in Richtung auf die Kanalwände 72 gedrängt werden, wodurch im Kanal Reibung entsteht, die die Halteelemente 922 möglicherweise bereits ausreichend fixiert, so dass der in Fig. 21 erkennbare Fixierungsstopfen 66 dann nicht mehr benötigt wird. Ist der Stopfen 66 zur Sicherung der Halteelemente 922 nicht nötig, braucht der Stopfen 66 auch nicht entfernt zu werden, wenn der Löseschlüssel 68 durch die Öffnung 74 im Kanaldeckel 76 in den durch die beiden Halteelemente 922 gebildeten Rücksprungbereich 78 eingeführt werden soll. Wird der Schlüssel 68 dann gemäß Fig. 21 gegen Uhrzeigerrichtung gedreht, drückt der Schlüssel mit seinen Flügeln 80 gegen die Endfläche 82 des Rücksprungbereichs 78 und verschiebt dabei das Halteelement 922 in den Kanai hinein, bis die in Fig. 28 dargestellte Stellung erreicht ist, zu welchem Zeitpunkt der Schlüssel um 90° verdreht ist und sich selbst hält. Dann kann die ganze in Fig. 21 dargestellte Einheit aus dem Durchbruch in der dünnen Wand 914 herausgezogen werden, worauf die eventuell miteinander verklemmten Bauteile wieder getrennt werden können.

Gut zu erkennen ist auch der Aufnahmeraum 84 für die Federn 928, siehe die Fig. 24 bis 28.

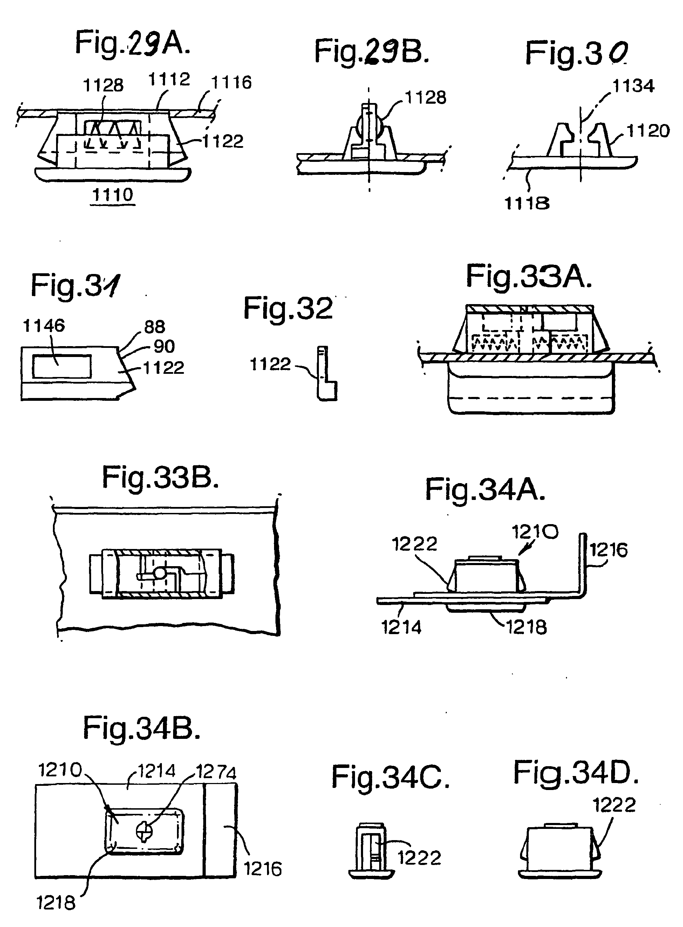

Auch die vom Rumpfteil 1120 gebildeten schrägen Flächen, siehe die Fig. 29B und Fig. 30, erleichtern das Einbauen in eine rechteckige Öffnung 1112 in einer dünnen Wand 1116.

In ein Sackloch mit T-artigem Querschnitt, z. B. in der Stirnseite des Verschlussgehäuses, nicht dargestellt, kann auch ein einstückiges, T-förmiges Klipselement eingeführt werden, obwohl dieses Klipselement nach oben hin ebenfalls offen wäre.

Die Form des Durchbruchs muss nicht rechteckig sein, wie bei den bisher dargestellten Ausführungsformen, sie kann auch rund sein, wenn die gegebene Verdrehbarkeit nicht stört oder sogar gewünscht wird, oder zwei Durchbrüche oder Noppen eine Drehung verhindern, oder eine Kreuzform (ähnlich dem "Roten Kreuz") aufweisen, mit dann z.B. vier jeweils um 90 Winkel-Grad versetzten Halteelementen, was eine besonders hohe Drehsicherung ergibt, neben besonders hoher Haltefestigkeit, oder eine Ovalform oder noch eine noch andere, jeweils geeignet erscheinende Form, an die das Kopfteil anzupassen wäre.

Ein praktisches Anwendungsbeispiel für die in Fig. 21, 22 bis 28 geschilderte Ausführungsform ist in den Fig. 34 bis 37 dargestellt. Hier wird eine dünne Wand 1214 auf einen Wandträger 1216 festgehalten, welche Wand 1214 und welcher Träger 1216 jeweils einen Durchbruch 1212 bzw. 1213 aufweisen, durch welche Durchbrüche ein Schnappbefestigungselement 1210 hindurchsteckbar und hinter dem Träger verriegelbar ist, wie in Fig. 34A erkennbar. Zum Lösen besitzt das Schnappbefestigungsteil 1210 sowohl am Vorderende wie auch an der Hinterseite jeweils einen Durchbruch 1274, so dass der entsprechende Schlüssel 68 sowohl von vorne wie auch von hinten eingesteckt werden kann, um das Befestigungselement wieder zu lösen und die dünne Wand 1214 von dem Wandträger 1216 zu trennen.

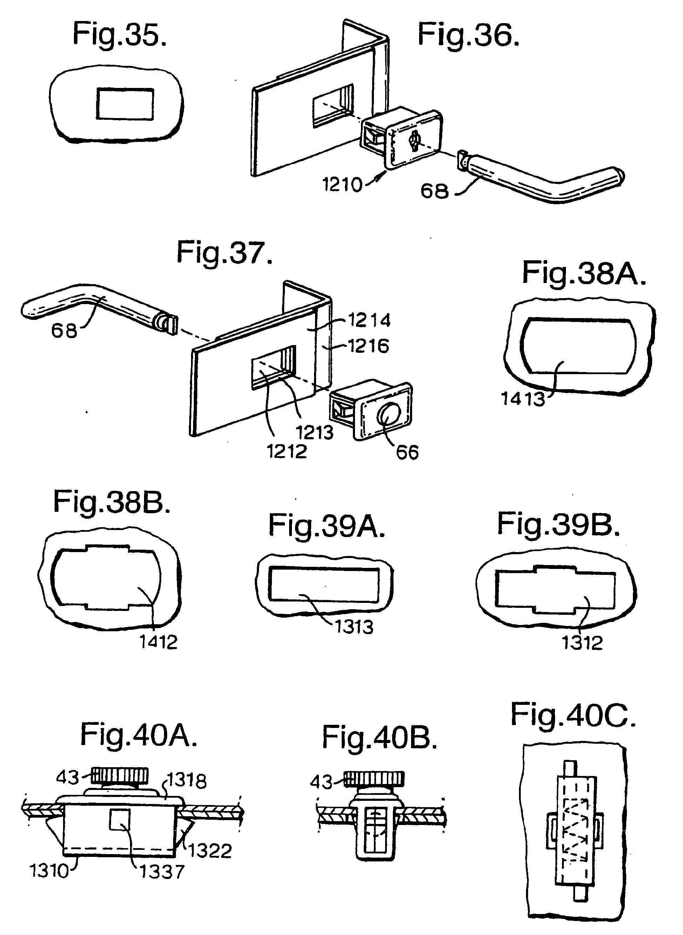

Dieses Lösen von vorne bzw. von hinten ist in den Fig. 36 bzw. 37 angedeutet.

Aus optischen Gründen aber auch um ein Staubeindringen zu verhindern, kann die Öffnung 1274 durch einen Stopfen 66 verschlossen sein, der zugleich dazu dienen könnte, die Halteelemente 1122 zu arretieren, so dass keine ungewollte Lösung sich ergibt.

Ein weiteres nicht erfindungsgemäßes Anwendungsbeispiel zeigen die Fig. 39 bis 44. In Fig. 38 ist ein rechteckiger Durchbruch 1313 in einer dünnen Wand 1314 und ein Durchbruch 1312 in einem Wandträger 1316 zu erkennen. Der Durchbruch 1413 und der Durchbruch 1412 hat zwei parallele Kanten und dazu senkrecht abgerundete Kanten, siehe Fig. 38A und 38B. Alle Durchbrüche bilden Einschnitte in den sich gegenüberliegenden parallelen Wänden.

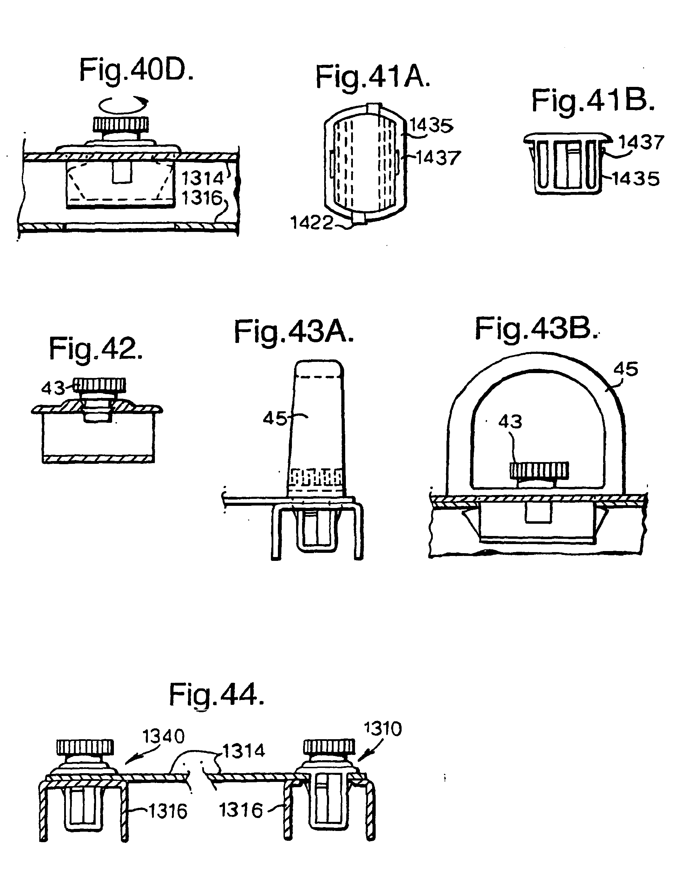

In die Öffnung 1312 der dünnen Wand 1314 lässt sich ein Gehäuse 1335 einklipsen, wobei der Klipsvorgang durch Nasen 1337 bewerkstelligt wird, die von dem Kunststoffgehäuse vorspringen, aber so weit nachgiebig sind, dass sie beim Einschieben der Kante der Bohrung 1312 nachgeben können. Damit ist das Gehäuse innerhalb der dünnen Wand 1314 festgelegt. Das Gehäuse 1335 bildet gleichzeitig Kanäle oder Führungen 1333 für Platten bzw. Schubelemente 1323, die sich ähnlich der geschilderten Art und Weise gemäß Fig. 21 bis 28 zurückziehen lassen, wenn ein Knopf 43, der durch die Flanschanordnung 1318 nach innen reicht und dort gelagert ist, um eine viertel Drehung gedreht wird, wobei die Halteelemente 1322 soweit zurückgezogen werden, dass der Durchbruch des Wandträgers 1318 frei kommt, wobei die Rücksprünge in dem Durchbruch 1312 dazu dienen, die Nasen 1337 durchzulassen, die ja nicht zurückgezegen werden. Dieser Vorgang ist in Fig. 40D zu erkennen. Die Konstruktion kann gemäß den bereits geschilderten Ausführungsformen so getroffen werden, dass bei 90° sich die Auslösevorrichtung arretiert, so dass mehrere derartige Schnappbefestigungen 1310 gleichzeitig gelöst gehalten und aus einem Wandträger 1316 herausgezogen werden können.

Ein solcher Fall ist auch in Fig. 44 dargestellt, bei der zwei derartige

Schnappbefestigungen 1310 eine dünne Wand 1314, wie beispielsweise ein Wandelement oder eine Verschlussanordnung von einem Wandträger 1316 angebracht ist, beispielsweise an den Rahmen eines Gehäuses.

Der Flansch 1318 der Schnappbefestigung kann auch einen Griff umfassen, siehe Fig. 43B und 43A, der die Betätigungsschraube 43 umschließen mag.

Als Plattenelemente können unterschiedliche Konstruktionen angewendet werden, wie sie für vorstehend schon im einzelnen geschildert worden sind.

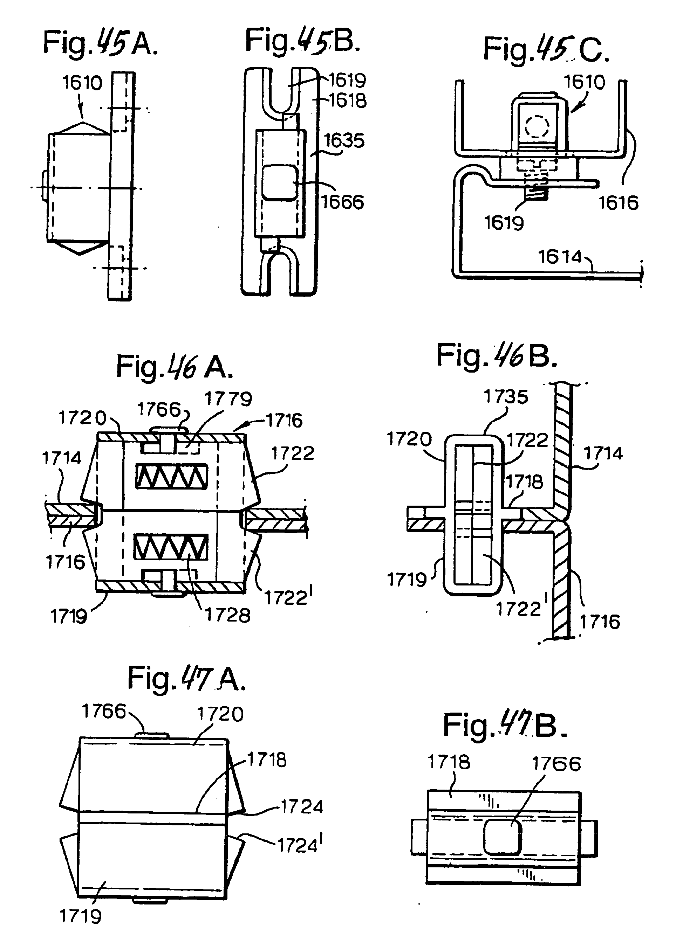

In den Fig. 45A und 45B sind in zwei Ansichten eine Schnappbefestigung mit nicht selbsthemmenden Platten dargestellt, bei der der Fußteil als Bock verstellbar angeschraubt werden kann. Durch die Verstellbarkeit kann eine Anpassung an eine aufgehängte Tür erreicht werden.

In Fig. 46 A bis Fig. 48 dient die erfindungsgemäße Schnappbefestigung 1710 als Verbinder für zwei an der vorgesehenen Verbindungsstelle mit Durchbrüchen 1712, 1713 versehene dünne Wände 1714, 1716, wie Metallblech, als ein Ersatz für eine Schweißverbindung, die bei manchen Metallen, wie Edelstahl schwierig ist und zu Verfärbungen führt, oder einer umständlichen Schraubverbindung, deren Teile in Schaltschränken bei Herabfallen zu Kurzschlüssen führen kann, oder Nietungen, wobei die erfindungsgemäße Schnappverbindung auch dort einsetzbar ist, wo die Verbindungsstelle schlecht oder gar nicht zugänglich ist, wenn die Verbindung hergestellt werden soll.

Die Lösung besteht darin, dass Fußteil 1718 und Kopfteil 1720 ein gemeinsames Gehäuse 1735 aufweisen, mit in beiden Teilen 1718, 1720 annähernd spiegelbildlich zur Gehäusemittellinie angeordneten Halteelementen 1722, 1722', die so gestaltet sind, dass sie in Einschubrichtung gegen Federkraft 1728 selbsthemmend sind und die Durchbruchränder mit einer Schrägfläche 1724, 1724' in Eingriff nehmen, wobei entlang der Außenwand des Gehäuses 1735 in Höhe der Schrägfläche 1724 der Halteelemente des Kopfteils 1720 im wesentlichen parallel zur Einschubrichtung ein Auflagerand 1718 verläuft, der die anliegenden Ränder des Durchbruchs 1712 in der einen Wand 1716 abdeckt und von dem Durchbruch 1713 in der zweiten Wand 1714 aufnehmbar ist. (Fig. 46 A bis 48)

Die Anordnung ist insoweit ähnlich der der Fig. 2, bei der jedoch nur der Fußteil 22 selbsthemmende Halteelemente 22 aufweist, der Kopfteil 20 jedoch nicht. Bei der Anordnung gemäß Fig. 46A ist die Steigung der Schrägfläche 1724 größer und dadurch auch selbsthemmend.

Auch hier brauchen die Durchbrüche nicht unbedingt rechteckig zu sein, andere Formen, wie insbesondere Kreisform lassen sich auch verwirklichen, Das Gehäuse hat dann entsprechend angepasste Aussenkontour.

Statt dem Stopfen 1766 zur Wegbegrenzung der Halteelemente zu verwenden, kann auch ein durch die Rücksprünge 1779 reichender Querstift vorgesehen werden, der in den Längswänden gehalten ist, nicht dargestellt.

Ebenso ist möglich, in kinematischer Umkehr die Halteelemente mit Vorsprüngen zu versehen, die in vom Gehäuse gebildete Rücksprünge oder Langlöcher reichen und den Bewegungsweg der Halteelemente beschränken.

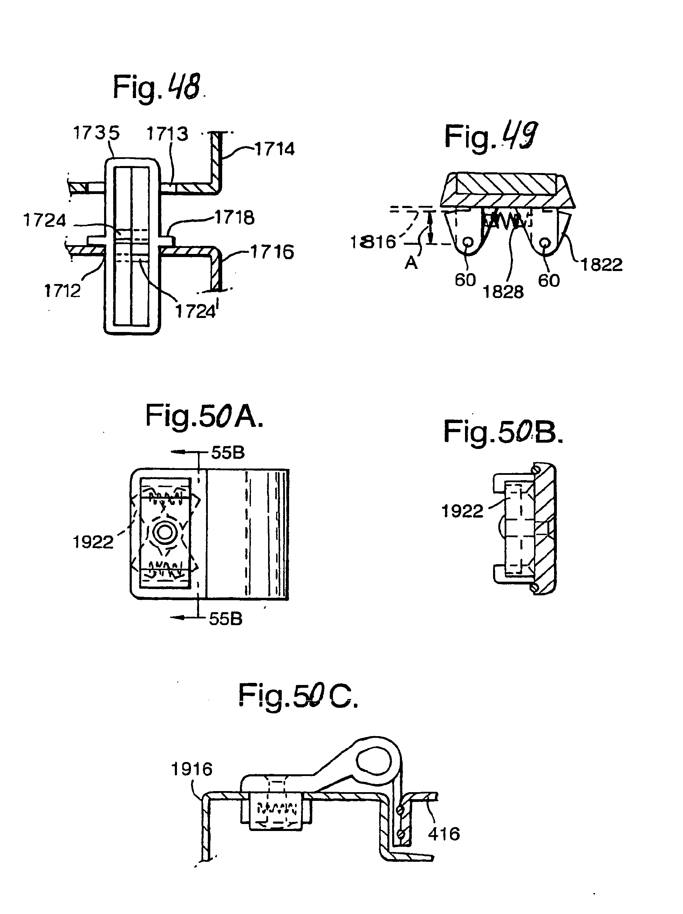

Statt linear verschiebliche Halteelemente einzusetzen, kann man in vielen Fällen auch eine Schwenkbewegung benutzen. So zeigt Fig. 49 eine nicht erfindungsgemäße Schnappbefestigung, die dadurch gekennzeichnet ist, dass die Halteelemente 1822 im Abstand (A) zur dünnen Wand 1816 um eine zur Ebene der dünnen Wand 1816 parallele Achse drehbar angeordneten Hebel sind. (Fig. 49)

Alternativ kann die nicht erfindungsgemäβße Schnappbefestigung aber auch dadurch gekennzeichnet sein, dass die Halteelemente 1922 im Abstand zur dünnen Wand 1916 um eine zur Ebene der dünnen Wand 1916 senkrechte Achse drehbar angeordnete Hebel sind (Fig. 50 A bis 50 C).

### Gewerbliche Auswertbarkeit

Die Erfindung ist im Schaltschrankbau gewerblich auswertbar.

### Bezugszeichenliste

- 10,110,210,310: Schnappbefestigung, Verbindungsteil
- 11: Scharnier
- 12, 112, 1112, 1212. 1712: Durchbruch im Wandträger
- 13, 113, 1213, 1313, 1713: Durchbruch in der dünnen Wand, weibliches Einsteckteil
- 14, 114, 714, 914, 1314, 1714: dünne Wand
- 15, 115: Griff, Handgriff, Handmulde
- 16, 816, 1116, 1216, 1316, 1716, 1816: Wandträger
- 17,817: Steg, dünne Wand
- 18, 118, 218, 318, 418, 1618, 1718: Flansch, Fußteil, Fußplatte, Grundplatte, Befestigungsplatte
- 119,219,319: Bolzen, Bohrung, Fußteil
- 20, 320, 1020, 1720: Kopfteil, männliches Einsteckteil
- 21: Durchbruch
- 22, 122, 322, 422, 922, 1122, 1322,:
- 1722, 1722', 1822: Halteelemente, Schubelemente, Platten
- 23, 123, 223, 323, 423, 1523: Schubelemente, Halteelemente
- 24, 424, 1724, 1724': Dachform, steilerer Teil
- 25, 25': Dreieckseite, Schrägfläche
- 26: Dachform, flacher Teil
- 27, 27': Dreieckseite, Schrägfläche
- 28, 928, 1028, 1728: Federelement
- 29: Werkzeug
- 30: Achse
- 331: Einstülpung
- 32: Durchbruch
- 33: Führung, Kanal
- 34, 1134: Führung, Kanal
- *35, 935,1335, 735*: *Gehäuse*
- 36: Durchbruchkante
- *37, 2037*: *Befestigungsnocken, Federteil, -element*
- 38: Endfläche, Anschlagfläche
- 39: Endfläche, Anschlagfläche
- 40: Schraube
- 41: Ansatz
- 42,342,442,542: Ansatz, Vorsprung, Stift
- 43: Drehknopf, Schlüssel
- 44: Madenschraube
- 45: Griffeinrichtung
- 46,146: Durchbruch
- 47: Durchbruch
- 48 .: Bodenfläche
- 49: Durchmesser des Kopfteils; Bewegungsrichtung
- 50: Sackbohrung
- 51: herausragendes Ende des Schubelements
- 52: Kante
- 53: herausragendes Ende des Halteelements
- 54, 1054: Schlitzraum
- 56: Kante
- 57: Auflageschultern
- 58: Arm
- 59: Einschnitt
- 360: Anlagefläche
- 61: Steg
- 62: Seitenfläche
- 64: Ausnehmung
- 66, 1766: Stopfen, Ansatz, Vorsprung, Stift
- 67: Gehäuseschlitz
- 68: Schlüssel
- 69: Anschlagfläche
- 70: Schrägfläche
- 71: Anschlagfläche
- 72: Kanalwand
- 73: Flansch
- 74, 1274: Öffnung
- 75: Farbmarkierung
- 76: Kanaldeckel
- 77: Farbmarkierung
- 78: Rücksprungbereich
- 79, 1779: Einschnitt, Einsenkung
- 80: Flügel
- 81: Fläche
- 82: Endfläche
- 83: Deckel
- 84, 1084: Aufnahmeraum
- 85: Einschnitt
- 86, 186: Noppen, Vorsprung
- 88: gerade Kante
- 90: Einlaufschräge
- A: Abstand
- B: Abschnitt

## Patentansprüche

1. Schnappbefestigung (10, 110, 210, 310, 410, 510, 610, 710, 810, 910, 1010, 1110, 1210, 1310, 1410, 1510, 1610, 1710, 1810, 1910) *geeignet* zur Festlegung einer mit einem Durchbruch (13) versehenen dünnen Wand (14), wie Gehäusewand, Türblatt, Klappe oder dgl., an einem ebenfalls mit einem Durchbruch versehenen Wandträger (16), wie Gehäuserahmen, Türrahmen, Wandöffnungsrand oder dgl., mit einem am Wandträger (16) in dessen Durchbruch (12) anbringbaren Fußteil (18), mit sich von diesem wegerstreckendem Kopfteil (20), welcher in seinem Längsschnitt vom Ende des Kopfteils (20) in Richtung zum Fußteil (18) einen zunächst anwachsenden und dann wieder abfallenden Durchmesser (49) aufweist, welcher Kopfteil (20) ein männliches Einsteckteil darstellt, das von einem hinterschnittenen, von dem Durchbruch (13) der dünnen Wand (14) gebildeten oder getragenen weiblichen Einsteckteil (13) unter Überwindung einer in Richtung des Durchmessers (49) radial nach außen wirkenden Federkraft (28) aufnehmbar ist, *wobei* der Kopfteil (20) eine Führung oder Kanal (33, 34) für ein oder zwei oder mehr durch zumindest eine Feder (28) in eine über das Ende der Führung oder des Kanals (33, 34) hinausragenden Stellung gedrückte Schubelemente oder Halteelemente (22, 23) darstellt, deren aus der Führung oder dem Kanal hinausragende Enden (51, 53) in einer senkrecht zur dünnen Wand (14) liegenden Projektionsebene eine dreieckige oder ballenförmige Gestalt haben, **dadurch gekennzeichnet, daß** der Fußteil (322) im wesentlichen den gleichen, insbesondere gespiegelten Aufbau des Kopfteils 323, 18, 20) hat.

2. Schnappbefestigung nach Anspruch 1, **dadurch gekennzeichnet, daß** die beiden Teile (22, 23), Kopfteil (23,323) und Fußteil (22,322), eine gemeinsame zwischen ihnen liegende Fußplaae (18, 118) aufweisen.

3. Schnappbefestigung nach Anspruch 2, **dadurch gekennzeichnet, daß** die Fußplatte (18) des Kopfteils (320) von dem Steg des Fußteils (319) gebildet oder getragen ist.

4. Schnappbefestigung nach Anspruch 2, **dadurch gekennzeichnet, daß** der Fußteil (319) eine größere Längserstreckung als der Kopfteil (320) aufweist und mit seinem Steg Auflageschultern (57) für die dünne Wand (14) bildet.

5. Schnappbefestigung nach Anspruch 2, 3 oder 4, **dadurch gekennzeichnet, daß** die freien Enden (51) der als *Halte- oder Schubelemente* (22) des Fußteils (19) dienenden längsverschiebliche Platten (22) eine derartige unsymmetrische Dachform (26, 24) haben, daß das Fußteil (19) in einen geeigneten Durchbruch (12) in einer dünnen Wand oder Wandträger (16) unter Einschieben der längsverschieblicheiblichen Platten (22) unter Führung des flacher geneigten Teil (26) der Dachform (26) eingeschoben werden kann, eine Rückwärtsbewegung unter Führung des steileren Teils (24) des Daches aber wegen Selbsthemmung der längsverschieblichen Platten (22) in ihrer Führung (19) nicht möglich ist.

6. Schnappbefestigung nach einem der Ansprüche 1 bis 5, **dadurch gekennzeichnet, daß** in dem die selbsthemmende Schnappbefestigung umfassenden Gehäuse (935) stirnseitig und/oder rückseitig ein Werkzeug wie Schlüssel (68) einführbar ist, der durch Drehung die *Halte- und* Schubelemente (22) gegen die Federkraft (28) zurückzuziehen in der Lage ist

7. Schnappbefestigung nach einem der Ansprüche 1 bis 5 ais Verbinder für zwei an der vorgesehenen Verbindungsstelle mit Durchbrüchen (1712, 1713) versehene dünne Wände (1714, 1716), wie Metallblech, **dadurch gekennzeichnet, daß** Fußteil (1718) und Kopfteil (1720) ein gemeinsames Gehäuse (1735) aufweisen, mit in beiden Teilen (1718, 1720) annähernd spiegelbildlich zur Gehäusemittellinie angeordneten Halteelementen (1722, 1722'), die so gestaltet sind, daß sie in Einschubrichtung gegen Federkraft (1728) selbsthemmend sind und die Durchbruchränder mit einer Schrägfläche (1724, 1724') in Eingriff nehmen, *und daß* entlang der Außenwand des Gehäuses (1735) in Höhe der Schrägfläche (1724) der Halteelemente des Kopfteils (1720) im wesentlichen parallel zur Einschubrichtung ein Auflagerand (1718) verläuft, der die anliegenden Ränder des Durchbruchs (1712) in der einen Wand (1716) abdeckt und von dem Durchbruch (1713) in der zweiten Wand (1714) aufnehmbar ist.

8. Schnappbefestigung (10, 110, 210, 310, 410, 510, 610, 710, 810, 910, 1010, 1110, 1210, 1310, 1410, 1510, 1610, 1710, 1810, 1910) nach einem der Ansprüche 1 bis 5, **dadurch gekennzeichnet, daß** ein Gehäuse (1335) mit Befestigungsnocken (37) vorgesehen ist, das in eine Durchbruchöffnung (1313) in der dünnen Wand (1314) einklipsbar ist, und daß aus dem Gehäuse (1335) ein Betätigungsrad oder Drehknopf (43) oder Schlüssel hervortritt, mit dem die Schubelemente (1322) in das Gehäuse (1335) zurückziehbar sind.

9. Schnappbefestigung nach Anspruch 8, **dadurch gekennzeichnet, daß** das Betätigungsrad (46) in der Öffnungsstellung sich arretiert.

10. Schnappbefestigung nach einem der Ansprüche 1 bis 9, **dadurch gekennzeichnet, daß** von dem Gehäuse (1335) eine Griffeinrichtung (45) vorspringt.

11. Schnappbefestigung nach Anspruch 8, 9 oder 10, **dadurch gekennzeichnet, daß** die Befestigungsnocken durch in das Gehäuse (2018, 2020) einschiebbare Federteile (2037) ersetzt sind.

12. Schnappbefestigung nach Anspruch 8, 9, 10 oder 11, **dadurch gekennzeichnet, daß** der Drehknopf (2043) und/oder das Gehäuse (2018, 83) Markierungen (75, 77, 85) tragen, die auf die Betriebsstellung der Schubelemente (2022) , d.h. offen oder geschlossen, hinweisen.

13. Schnappbefestigung nach Anspruch 12, **dadurch gekennzeichnet, daß** die Markierung auf dem Gehäuse bzw. dem Drehknopf ein farbiger Punkt oder Flächenbereich (75, 77) ist, und die Markierung an dem Drehknopf bzw. an dem Gehäuse zumindest einen Einschnitt oder Durchbruch (85) darstellt, der so angeordnet ist, daß er in bestimmter Position des Drehknopfes bezüglich des Gehäuses, z.B. in zwei Endstellungen, den farbigen Punkt oder Flächenbereich sichtbar werden läßt.

14. Schnappbefestigung nach Anspruch 13, **dadurch gekennzeichnet, daß** der Drehknopf (2043) einen Flansch (73) bildet, der die farbigen Markierungen (75, 77) trägt, und daß der Flansch (83) oder Fußteil des Gehäuses die Einschnitte oder Durchbrüche (85) bildet.

15. Schnappbefestigung nach einem der Ansprüche 5 bis 10, **dadurch gekennzeichnet, daß** das Gehäuse sowohl eine nicht selbsthemmende Schnappbefestigung (1523) wie auch eine selbsthemmende Schnappbefestigung (1522) umschließt.

16. Schnappbefestigung nach Anspruch 15, **dadurch gekennzeichnet, daß** die beiden Arten der Schnappbefestigung (1522, 1523) zueinander bezüglich der Entfernung zur Ebene der dünnen Wand (1514) versetzt im Gehäuse (Fig. 46) angeordnet sind.

17. Schublade oder Einschub mit einer dünnwandigen Frontplatte, **dadurch gekennzeichnet, daß** die Frontplatte die dünne Wand (1314) und die Schubladenaufnahme (1316) den Wandträger gemäß einem der Ansprüche 1 bis 16 darstellt, und **gekennzeichnet durch** eine Schnappbefestigung oder mehrere Schnappbefestigungen nach einem der Ansprüche 1 bis 16.

18. Schrank mit einer dünnen Wand oder Türblatt, **gekennzeichnet durch** eine Schnappbefestigung oder mehrere Schnappbefestigungen nach einem der Ansprüche 1 bis 16.

19. Schrank nach Anspruch 18, **dadurch gekennzeichnet, daß** in der dünnen Wand (14) eine oder mehrere Handgriffe oder Handmulden (115) in Durchbrüchen angeordnet sind, die eine Schnappbefestigung ähnlich der des Fußteils der Ansprüche 1 bis 10 aufweisen.

20. Schrank nach Anspruch 19, **dadurch gekennzeichnet, daß** die dünne Wand (114) Stege (17) mit Durchbrüchen (21) zur Aufnahme der symmetrisch dachförmigen Enden (53) der Schnappbefestigung, d.h. nicht selbsthemmender Schoppbefestigung , gemäß einem der Ansprüche 1 bis 16 aufweist.

21. Schnappbefestigung (10, 110, 210, 310, 410, 510, 610, 710, 810, 910, 1010, 1110, 1210, 1310, 1410, 1510, 1610, 1710, 1810, 1910) nach einem der Ansprüche 1 bis 2160, **dadurch gekennzeichnet, daß** die Schubelemente (23) zwei verschieblich nebeneinander liegende Platten mit jeweils einem in Bewegungsrichtung langgestreckten Durchbruch (47) darstellen, die gemeinsam einen Aufnahmeraum für eine Spiraldruckfeder (28) bilden.

22. Schnappbefestigung nach Anspruch 21, **dadurch gekennzeichnet, daß** bei gemeinsamen Aufnahmeraum für die Feder (28) die Durchbrüche (47) derart weg von den balligen oder dreieckigen freien Enden verschoben angeordnet sind, daß die gemeinsame Feder (28) die beiden Platten (23) in deren Bewegungsrichtung (49) auseinander drängt.

23. Schnappbefestigung nach Anspruch 21 oder 22, **dadurch gekennzeichnet, daß** die Kanten der Durchbrüche (46, 47,146) Vorsprünge (186) oder Rücksprünge zur Fixierung der Feder (28) und der Platten (22, 23, 122) aufweisen.

24. Schnappbefestigung nach Anspruch 22 oder 23, **dadurch gekennzeichnet, daß** die beiden Platten (22, 23, 122) an ihrer einen äußeren Längskante eine Einschnitt (79) zur Begrenzung ihrer Längsbewegung durch einen in den Einschnitt (79) hineinragenden Ansatz, Vorsprung, Stopfen oder Stift (66)

25. Schnappbefestigung nach Anspruch 22, 23 oder 24, **dadurch gekennzeichnet, daß** die beiden Platten (123) in einem U-förmigen Gehäuse (35) längsverschieblich geführt sind, dessen Schenkelenden an einer vom Fußteil (18) gebildeten Grundplatte (118, 218) befestigt sind oder einstückig ausgehen.

26. Schnappbefestigung nach Anspruch 25, **dadurch gekennzeichnet, daß** das U-förmige Gehäuse (35) im Stegbereich einen Durchbruch (32) zur Aufnahme eines Stiftes (66) oder Stopfens (66) aufweist.

## Claims

1. A snap-on fixing (10, 110, 210, 310, 410, 510, 610, 710, 810, 910, 1010, 1110, 1210, 1310, 1410, 1510, 1610, 1710, 1810, 1910) *suitable* for fastening a thin wall (14) provided with an aperture (13), such as a housing wall, door leaf, shutter or the like, to a wall support (16) likewise provided with an aperture, such as a housing frame, door frame, wall opening edge or the like, with a foot part (18) which can be attached to the wall support (16) in its aperture (12), with a head part (20) extending away from this foot part (18), which head part (20) has, in its longitudinal section from the end of the head part (20) in the direction of the foot part (18), an initially growing and then once again falling diameter (49), which head part (20) represents a male insertion part which can be received by an undercut female insertion part (13) formed or supported by the aperture (13) of the thin wall (14) while overcoming a spring force (28) acting radially outwards in the direction of the diameter (49), *wherein* the head part (20) represents a guide or duct (33, 34) for one or two or more push elements or retaining elements (22, 23) pressed by at least one spring (28) into a position which projects beyond the end of the guide or the duct (33, 34), the ends (51, 53) of which push elements or retaining elements (22, 23) projecting from the guide or the duct in a projection plane which lies perpendicular to the thin wall (14) have a triangular or ball-shaped configuration, **characterised in that** the foot part (322) substantially has the same, in particular reflected structure of the head part (18, 20).

2. The snap-on fixing according to Claim 1, **characterised in that** both parts (22, 23), head part (23, 323) and foot part (22, 322), have a shared foot plate (18, 118) lying between them.

3. The snap-on fixing according to Claim 2, **characterised in that** the foot plate (18) of the head part (320) is formed or supported by the web of the foot part (319).

4. The snap-on fixing according to Claim 2, **characterised in that** the foot part (319) has a greater longitudinal extension than the head part (320) and with its web forms bearing shoulders (57) for the thin wall (14).

5. The snap-on fixing according to Claim 2, 3 or 4, **characterised in that** the free ends (51) of the longitudinally displaceable plates (22) which serve as *retaining or push elements* (22) of the foot part (19) have such an asymmetrical roof shape (26, 24) that the foot part (19) can be pushed into a suitable aperture (12) in a thin wall or wall support (16) with pushing-in of the longitudinally displaceable plates (22) with guidance of the more flatly inclined part (26) of the roof shape (26), a reverse movement with guidance of the steeper part (24) of the roof is, however, not possible because of self-locking of the longitudinally displaceable plates (22) in their guide (19).

6. The snap-on fixing according to one of Claims 1 to 5, **characterised in that** a tool such as a key (68) can be introduced at the front face and/or rear into the housing (935) surrounding the self-locking snap-on fixing, which key, as a result of rotation, is able to pull back the *retaining and* push elements (22) counter to the spring force (28).

7. The snap-on fixing according to one of Claims 1 to 5 as a connector for two thin walls (1714, 1716), such as sheet metal, provided at the intended connection point with apertures (1712, 1713) **characterised in that** the foot part (1718) and head part (1720) have a shared housing (1735), with retaining elements (1722, 1722') which are arranged in both parts (1718, 1720) approximately in a mirror image relative to the central line of the housing and which are configured such that they are self-locking in the push-in direction counter to spring force (1728) and engage the aperture edges with an inclined surface (1724, 1724'), *and that* a bearing edge (1718) runs along the outer wall of the housing (1735) at the height of the inclined surface (1724) of the retaining elements of the head part (1720) substantially parallel to the push-in direction, which bearing edge (1718) covers the adjoining edges of the aperture (1712) in one wall (1716) and can be received by the aperture (1713) in the second wall (1714).

8. The snap-on fixing (10, 110, 210, 310, 410, 510, 610, 710, 810, 910, 1010, 1110, 1210, 1310, 1410, 1510, 1610, 1710, 1810, 1910) according to one of Claims 1 to 5, **characterised in that** a housing (1335) is provided with a fixing cam (37) which can be clipped into an aperture opening (1313) in the thin wall (1314), and that there protrudes out of the housing (1335) an actuating wheel or rotary knob (43) or key with which the push elements (1322) can be pulled back into the housing (1335).

9. The snap-on fixing according to Claim 8, **characterised in that** the actuating wheel (46) is locked in the opening position.

10. The snap-on fixing according to one of Claims 1 to 9, **characterised in that** a handle apparatus (45) projects from the housing (1335).

11. The snap-on fixing according to Claim 8, 9 or 10, **characterised in that** the fixing cams are replaced by spring parts (2037) which can be pushed into the housing (2018, 2020).

12. The snap-on fixing according to Claim 8, 9, 10 or 11, **characterised in that** the rotary knob (2043) and/or the housing (2018, 83) bear markings (75, 77, 85) which indicate the operating position of the push elements (2022), i.e. open or closed.

13. The snap-on fixing according to Claim 12, **characterised in that** the marking on the housing or the rotary knob is a coloured point or surface region (75, 77), and the marking on the rotary knob or on the housing represents at least one notch or aperture (85) which is arranged such that it allows the coloured point or surface region to become visible when the rotary knob is in a specific position in relation to the housing e.g. in two end positions.

14. The snap-on fixing according to Claim 13, **characterised in that** the rotary knob (2043) forms a flange (73) which bears the coloured markings (75, 77), and that the flange (83) or foot part of the housing forms the notches or apertures (85).

15. The snap-on fixing according to one of Claims 5 to 10, **characterised in that** the housing encloses both a non-self-locking snap-on fixing (1523) and a self-locking snap-on fixing (1522).

16. The snap-on fixing according to Claim 15, **characterised in that** both types of the snap-on fixing (1522, 1523) are arranged in the housing in a manner offset to one another in terms of the distance to the plane of the thin wall (1514) (Fig. 46).

17. A drawer or slide-in module with a thin-walled front plate, **characterised in that** the front plate represents the thin wall (1314) and the drawer receptacle (1316) represents the wall support according to one of Claims 1 to 16, and **characterised by** a snap-on fixing or several snap-on fixings according to one of Claims 1 to 16.

18. A cabinet with a thin wall or door leaf, **characterised by** a snap-on fixing or several snap-on fixings according to one of Claims 1 to 16.

19. The cabinet according to Claim 18, **characterised in that** in the thin wall (14) one or more handles or hand cavities (115) are arranged in apertures, which have a snap-on fixing similar to that of the foot part of Claims 1 to 10.

20. The cabinet according to Claim 19, **characterised in that** the thin wall (114) has webs (17) with apertures (21) for receiving the symmetrically roof-shaped ends (53) of the snap-on fixing, i.e. non-self-locking snap-on fixing according to one of Claims 1 to 16.

21. The snap-on fixing (10, 110, 210, 310, 410, 510, 610, 710, 810, 910, 1010, 1110, 1210, 1310, 1410, 1510, 1610, 1710, 1810, 1910) according to one of Claims 1 to 16, **characterised in that** the push elements (23) represent two plates which are located displaceably next to one another with in each case one aperture (47) which is longitudinally extended in the direction of movement, which plates jointly form a receiving space for a spiral pressure spring (28).

22. The snap-on fixing according to Claim 21, **characterised in that**, in the case of a shared receiving space for the springs (28), the apertures (47) are arranged displaced away from the rounded or triangular free ends such that the shared spring (28) pushes apart both plates (23) in the direction of movement (49) thereof.

23. The snap-on fixing according to Claim 21 or 22, **characterised in that** the edges of the apertures (46, 47, 146) have projections (186) or recesses for fixing the spring (28) and the plates (22, 23, 122).

24. The snap-on fixing according to Claim 22 or 23, **characterised in that** both plates (22, 23, 122) have, on their one outer longitudinal edge, a notch (79) for limiting their longitudinal movement by means of a shoulder, projection, stopper or pin (66) projecting into the notch (79).

25. The snap-on fixing according to Claim 22, 23 or 24, **characterised in that** both plates (123) are guided longitudinally displaceably in a U-shaped housing (35), of which the limb ends are fixed or proceed in one piece at a base plate (118, 218) formed by the foot part (18).

26. The snap-on fixing according to Claim 25, **characterised in that** the U-shaped housing (35) has in the web region an aperture (32) for receiving a pin (66) or stopper (66).

## Revendications

1. Fixation par encliquetage (10, 110, 210, 310, 410, 510, 610, 710, 810, 910, 1010, 1110, 1210, 1310, 1410, 1510, 1610, 1710, 1810, 1910) appropriée pour fixer une paroi mince (14) pourvue d'un trou (13), telle qu'une paroi de boîtier, un battant de porte, un clapet ou analogue, sur un support (16) de paroi également pourvu d'un trou, tel qu'un cadre de boîtier, un cadre de porte, un bord d'ouverture de paroi ou analogue, avec une pièce de pied (18) pouvant être disposée sur le support (16) de paroi dans son trou (12), avec une pièce de tête (20) qui s'écarte de celle-ci, qui présente, en coupe longitudinale, de l'extrémité de la pièce de tête (20) dans le sens vers la pièce de pied (18) un diamètre (49) croissant d'abord, puis décroissant, laquelle pièce de tête (20) représentant une pièce d'emboîtement mâle qui peut être acceptée par une pièce d'emboîtement femelle (13) formée ou portée par le trou (13) de la paroi mince (14) en surmontant une force de ressort (28) agissant radialement vers l'extérieur dans le sens du diamètre (49), la pièce de tête (20) présentant un dispositif de guidage ou un canal (33, 34) pour un ou deux ou plus d'éléments coulissants ou de fixation (22, 23) poussés par au moins un ressort (28) dans une position dépassant l'extrémité du dispositif de guidage ou du canal (33, 34), dont les extrémités (51, 53) dépassant du dispositif de guidage ou du canal présentent, dans un plan de projection perpendiculaire à la paroi mince (14), une forme triangulaire ou cambrée, **caractérisée**
**en ce que** la pièce de pied (322) présente essentiellement la même structure, en particulier géométriquement inversée, que la pièce de tête (18, 20).

2. Fixation par encliquetage selon la revendication 1, **caractérisée en ce que** les deux pièces (22, 23), la pièce de tête (23, 323) et la pièce de pied (22, 322), présentent une plaque de pied (18, 118) commune située entre elles.

3. Fixation par encliquetage selon la revendication 2, **caractérisée en ce que** la plaque de pied (18) de la pièce de tête (320) est formée ou supportée par l'âme de la pièce de pied (319).

4. Fixation par encliquetage selon la revendication 2, **caractérisée en ce que** la pièce de pied (319) présente une extension longitudinale plus grande que la pièce de tête (320) et forme avec son âme des épaulements d'appui (57) pour la paroi mince (14).

5. Fixation par encliquetage selon la revendication 2, 3 ou 4, **caractérisée en ce que** les extrémités libres (51) des plaques (22) pouvant être déplacées longitudinalement servant d'éléments de fixation ou coulissants (22) de la pièce de pied (19) présentent une forme de toit (26, 24) asymétrique telle que la pièce de pied (19) peut être insérée dans un trou (12) approprié dans une paroi mince ou un support (16) de paroi en insérant les plaques (22) pouvant être déplacées longitudinalement avec guidage par la partie (26) présentant une inclinaison moindre de la forme de toit (26), mais qu'un mouvement en arrière avec guidage par la partie (24) plus pentue du toit n'est pas possible en raison de l'auto-blocage des plaques (22) pouvant être déplacées longitudinalement dans leur dispositif de guidage (19).

6. Fixation par encliquetage selon l'une quelconque des revendications 1 à 5, **caractérisée**
**en ce qu'**un outil tel qu'une clef (68) peut être introduit dans la face frontale ou arrière du boîtier (935) entourant la fixation par encliquetage autobloquante, qui est en mesure de retirer, par rotation, les éléments de fixation et coulissants (22) contre la force de ressort (28).

7. Fixation par encliquetage selon l'une quelconque des revendications 1 à 5 comme pièce de raccord pour deux parois minces (1714, 1716), telles que de la tôle métallique, pourvues, aux sites d'assemblage prévus, de trous (1712, 1713), **caractérisée**
**en ce que** la pièce de pied (1718) et la pièce de tête (1720) présentent un boîtier (1735) commun, avec des éléments de fixation (1722, 1722') disposés de manière géométriquement inversée par rapport à la ligne centrale du boîtier dans les deux pièces (1718, 1720), qui sont réalisés de manière telle qu'ils sont autobloquants dans le sens d'insertion contre une force de ressort (1728) et s'agrippent aux bords du trou avec une surface en biais (1724, 1724') et en ce qu'un bord d'appui (1718) s'étend le long de la paroi extérieure du boîtier (1735) à hauteur de la surface en biais (1724) des éléments de fixation de la pièce de tête (1720) de manière essentiellement parallèle au sens d'insertion, qui recouvre les bords adjacents du trou (1712) dans une paroi (1716) et qui peut être accepté par le trou (1713) dans la deuxième paroi (1714).

8. Fixation par encliquetage (10, 110, 210, 310, 410, 510, 610, 710, 810, 910, 1010, 1110, 1210, 1310, 1410, 1510, 1610, 1710, 1810, 1910) selon l'une quelconque des revendications 1 à 5, **caractérisée**
**en ce qu'**on a prévu un boîtier (1335) avec des ergots de fixation (37) qui peut être fixé par clipsage dans une ouverture (1313) dans la paroi mince (1314) et en ce qu'une roue d'actionnement ou un bouton rotatif (43) ou une clef dépasse du boîtier (1335) avec lequel/laquelle les éléments coulissants (1322) peuvent être retirés dans le boîtier (1335).

9. Fixation par encliquetage selon la revendication 8, **caractérisée en ce que** la roue d'actionnement (46) se bloque dans la position d'ouverture.

10. Fixation par encliquetage selon l'une quelconque des revendications 1 à 9, **caractérisée**
**en ce qu'**un dispositif à poignée (45) dépasse du boîtier (1335).

11. Fixation par encliquetage selon la revendication 8, 9 ou 10, **caractérisée**
**en ce que** les ergots de fixation sont remplacés par des parties à ressort (2037) pouvant être insérées dans le boîtier (2018, 2020).

12. Fixation par encliquetage selon la revendication 8, 9, 10 ou 11, **caractérisée**
**en ce que** le bouton rotatif (2043) et/ou le boîtier (2018, 83) porte(nt) des marquages (75, 77, 85) qui indiquent la position de fonctionnement des éléments coulissants (2022), c'est-à-dire ouverte ou fermée.

13. Fixation par encliquetage selon la revendication 12, **caractérisée en ce que** le marquage sur le boîtier ou, selon le cas, le bouton rotatif est un point de couleur ou une zone plate (75, 77), et le marquage sur le bouton rotatif ou, selon le cas, sur le boîtier représente au moins une découpe ou un trou (85), qui est disposé(e) de manière telle que dans une position déterminée du bouton rotatif par rapport au boîtier, par exemple dans deux positions d'extrémité, le point coloré ou la zone plate devient visible

14. Fixation par encliquetage selon la revendication 13, **caractérisée en ce que** le bouton rotatif (2043) forme une bride (73), qui porte les marquages de couleur (75, 77), et **en ce que** la bride (83) ou pièce de pied du boîtier forme les découpes ou trous (85).

15. Fixation par encliquetage selon l'une quelconque des revendications 5 à 10, **caractérisée**
**en ce que** le boîtier entoure tant une fixation par encliquetage non autobloquante (1523) qu'une fixation par encliquetage autobloquante (1522).

16. Fixation par encliquetage selon la revendication 15, **caractérisée en ce que** les deux types de fixation par encliquetage (1522, 1523) sont disposés dans le boîtier de manière décalée l'un par rapport à l'autre par rapport à l'éloignement du plan de la paroi mince (1514) (Fig. 46).

17. Tiroir ou bloc emboîtable avec une plaque frontale à paroi mince, **caractérisé**
**en ce que** la plaque frontale représente la paroi mince (1314) et le dispositif de réception des tiroirs (1316) forme le support de paroi selon l'une quelconque des revendications 1 à 16, et **caractérisé par** une fixation par encliquetage ou plusieurs fixations par encliquetage selon l'une quelconque des revendications 1 à 16.

18. Armoire présentant une paroi mince ou un battant de porte, **caractérisée par** une fixation par encliquetage ou plusieurs fixations par encliquetage selon l'une quelconque des revendications 1 à 16.

19. Armoire selon la revendication 18, **caractérisée**
**en ce que** dans la paroi mince (14), un(e) ou plusieurs poignées ou creux (115) sont disposé(e)s dans des trous, dans lesquels une fixation à encliquetage s'agrippe de manière analogue à celle de la pièce de pied selon les revendications 1 à 10.

20. Armoire selon la revendication 19, **caractérisée**
**en ce que** la paroi mince (114) présente des âmes (17) avec des trous (21) pour recevoir les extrémités (53) symétriques en forme de toit de la fixation par encliquetage, c'est-à-dire la fixation par encliquetage non autobloquante, selon l'une quelconque des revendications 1 à 16.

21. Fixation par encliquetage (10, 110, 210, 310, 410, 510, 610, 710, 810, 910, 1010, 1110, 1210, 1310, 1410, 1510, 1610, 1710, 1810, 1910) selon l'une quelconque des revendications 1 à 16, **caractérisée**
**en ce que** les éléments coulissants (23) représentent deux plaques placées de manière coulissante l'une à côté de l'autre avec à chaque fois un trou (47) s'étendant longitudinalement dans le sens de déplacement, qui forment ensemble un espace de réception pour un ressort de compression en spirale (28).

22. Fixation par encliquetage selon la revendication 21, **caractérisée en ce que** dans le cas d'un espace de réception commun pour le ressort (28), les trous (47) sont disposés en se décalant des extrémités libres cambrées ou triangulaires de manière telle que le ressort commun (28) écarte les deux plaques (23) l'une de l'autre, dans leur sens de déplacement (49).

23. Fixation par encliquetage selon la revendication 21 ou 22, **caractérisée**
**en ce que** les bords des trous (46, 47,146) présentent des parties proéminentes (186) ou en retrait pour la fixation du ressort (28) et des plaques (22, 23, 122).

24. Fixation par encliquetage selon la revendication 22 ou 23, **caractérisée**
**en ce que** les deux plaques (22, 23, 122) présentent, le long d'un côté longitudinal extérieur, une découpe (79) pour limiter leur mouvement longitudinal par un épaulement, une partie proéminente, un bouchon ou une tige (66) s'avançant dans la découpe (79).

25. Fixation par encliquetage selon la revendication 22, 23 ou 24, **caractérisée**
**en ce que** les deux plaques (123) sont guidées en pouvant se déplacer longitudinalement dans un boîtier (35) en forme de U, dont les extrémités des branches sont fixées sur une plaque de base (118, 218) formée par la pièce de pied (18) ou en partent en formant une pièce avec celle-ci.

26. Fixation par encliquetage selon la revendication 25, **caractérisée en ce que** le boîtier en forme de U (35) présente au niveau de l'âme une ouverture (32) pour recevoir une tige (66) ou un bouchon (66).
